# EUROPÄISCHE PATENTSCHRIFT

(11) **EP 3 384 167 B1**
(45) Veröffentlichungstag und Bekanntmachung des Hinweises auf die Patenterteilung: **17.03.2021**
(21) Anmeldenummer: 16825431.6
(22) Anmeldetag: 22.12.2016
(51) Int. Cl.: F16B 5/02, B60R 9/058, F16B 21/02

(54) **VERSTELLBARE DISTANZHÜLSE**
ADJUSTABLE SPACER SLEEVE
DOUILLE D'ÉCARTEMENT RÉGLABLE

(30) Priorität: 23.12.2015 DE 102015122744
(43) Veröffentlichungstag der Anmeldung: 10.10.2018
(73) Patentinhaber: Böllhoff Verbindungstechnik GmbH, 33649 Bielefeld (DE)
(72) Erfinder: FIGGE, Hans-Ulrich, 33758 Schloß Holte-Stukenbrock (DE); BURGER, Ingo, 33758 Schloß Holte-Stukenbrock (DE); ZELMER, Viktor, 33719 Bielefeld (DE)
(74) Vertreter: HWP Intellectual Property
(86) Internationale Anmeldenummer: PCT/EP2016/082427
(87) Internationale Veröffentlichungsnummer: WO 2017/109099

(56) Entgegenhaltungen:
- EP-A1- 2 113 421
- WO-A1-2014/120707
- DE-A1- 19 949 654
- DE-T2- 60 119 882
- FR-A1- 2 925 029

## Beschreibung

### 1. Gebiet der Erfindung

Die vorliegende Erfindung betrifft eine verstellbare Distanzhülse, mit der ein Abstand zwischen einem ersten und einem zweiten Bauteil durch Verstellen einer Länge der Distanzhülse überbrückbar ist. Des Weiteren betrifft vorliegende Erfindung eine Verbindung zwischen zumindest einem ersten Bauteil und einer verstellbaren Distanzhülse sowie ein Verfahren zur Installation der verstellbaren Distanzhülse in einer unrunden Bauteilöffnung eines ersten Bauteils und zur Verbindung mit einem zweiten Bauteil.

### 2. Hintergrund der Erfindung

Im Stand der Technik sind zur Befestigung von einem ersten Bauteil und einem zweiten Bauteil aneinander Toleranzausgleichselemente bekannt, die selbsttätig oder manuell betätigt beim Einschrauben einer Befestigungsschraube die Distanz zwischen dem ersten und dem zweiten Bauteil ausgleichen. Bei selbsttätigem Toleranzausgleich dreht die Befestigungsschraube über einen inneren Mitschlepper der Innenhülse des Toleranzausgleichselements diese Innenhülse mit, so dass sich das Toleranzausgleichselement bis zu einem Anliegen an beiden Bauteilen verlängert. Danach blockieren beide Bauteile eine weitere Verlängerung des Toleranzausgleichselements. Der Nachteil dieser Toleranzausgleichselemente besteht darin, dass gerade bei leicht verformbaren Bauteilen bereits das Anliegen und weitere Mitschleppen der Innenhülse durch die Befestigungsschraube zu einem Ausbeulen von zumindest einem der miteinander zu verbindenden Bauteile führen kann. Ein derartiges Toleranzausgleichselement ist in DE 20 2010 002 447 U1 beschrieben.

Bei manuell mit einem Werkzeug betätigten Distanzhülsen besteht der Nachteil, dass diese, bevor sie zwischen den zwei Bauteilen verspannt sind, mit einem Spezialwerkzeug festgehalten werden müssen, da die Befestigungsschraube als Fixierelement der Distanzhülse noch nicht eingesetzt ist.

Eine mit einem Werkzeug in Ihrer Länge verstellbare Distanzhülse ist in EP 1 533 185 B1 beschrieben. Hier wird die Distanzhülse in einem Schlüsselloch eines Trägerteils eingesetzt und dort drehfest mithilfe eines Werkzeugs gehalten. Zudem stellt das Werkzeug eine Verbindung mit einem Antriebsmittel im Inneren einer Verstellhülse der Distanzhülse her. Allein über diesen inneren Angriff wird die Länge der Distanzhülse an den Abstand der beiden miteinander zu verbindenden Bauteile, hier das Trägerteil und eine Dachhaut eines Kraftfahrzeugs, angepasst. Nachfolgend werden beide Bauteile über eine Befestigungsschraube miteinander verbunden, die die verstellbare Distanzhülse durchläuft. Diese Konstruktion hat den Nachteil, dass zur Befestigung der Distanzhülse in dem Schlüsselloch des Trägerteils ein aufwendiges Werkzeug erforderlich ist. Dieses Werkzeug hält zunächst die Distanzhülse in Position. Des Weiteren realisiert dieses Werkzeug eine Rotationsblockade der einen Hülse der Distanzhülse. Zudem stellt das Werkzeug ein Eingriffsmittel bereit, das eine Drehverbindung mit dem Antriebsmittel im Inneren der Verstellhülse der Distanzhülse erzeugt. Neben dem hohen konstruktiven Aufwand für das Werkzeug zur Installation der Distanzhülse hat das hier verwendete Schlüsselloch den Nachteil, dass vor vollständiger Befestigung der Distanzhülse die Distanzhülse sehr leicht aus dem Schlüsselloch gelöst werden kann. Damit sind Montagefehler und zusätzlicher Montageaufwand verbunden.

Eine weitere verstellbare Distanzhülse zur Befestigung einer Dachleiste an einer Trägerstruktur eines Kraftfahrzeugs ist in EP 2 720 907 B1 beschrieben. Bei dieser Distanzhülse wird ebenfalls über ein innenliegendes Antriebsmittel der Verstellhülse der Abstand zwischen einem Trägerteil und einer Dachhaut eingestellt. Zusätzlich stellt diese Distanzhülse neben einer Abstützung auf dem Trägerteil auch eine Anpassung der Distanzhülse an die Winkellage des Trägerteils bereit. Diese Anpassungsmöglichkeit stellt sicher, dass eventuelle Freiräume bei der Installation der Distanzhülse auf dem Trägerteil geschlossen werden. Somit werden spätere Setzvorgänge vermieden, die eventuell zu einem Lösen oder Lockern der Dachkonstruktion führen können. Insgesamt ist die hier beschriebene verstellbare Distanzhülse aufwendig in ihrer Konstruktion und Installation.

Eine weitere verstellbare Distanzhülse ist aus der DE 601 19 882 T2 bekannt.

Es besteht daher die Aufgabe vorliegender Erfindung, eine im Vergleich zum Stand der Technik vereinfachte Konstruktion einer verstellbaren Distanzhülse bereitzustellen, die neben einer effizienten Abstützung und Befestigung zweier zueinander benachbarter Bauteile auch eine effiziente Installation der verstellbaren Distanzhülse ermöglicht.

### 3. Zusammenfassung vorliegender Erfindung

Die obige Aufgabe wird durch eine verstellbare Distanzhülse gemäß dem unabhängigen Patentanspruch 1, eine Verbindung zwischen zumindest einem ersten Bauteil und einer verstellbaren Distanzhülse gemäß dem Patentanspruch 12, eine Verbindung zwischen einem ersten und einem zweiten Bauteil über eine verstellbare Distanzhülse gemäß dem Patentanspruch 15, sowie durch ein Verfahren zur Installation einer Distanzhülse gemäß dem unabhängigen Patentanspruch 16 gelöst. Vorteilhafte Ausgestaltungen vorliegender Erfindung gehen aus der folgenden Beschreibung, den begleitenden Zeichnungen und den weiteren abhängigen Ansprüchen hervor.

Mit der erfindungsgemäßen verstellbaren Distanzhülse ist ein Abstand zwischen einem ersten und einem zweiten Bauteil durch Verstellen einer Länge der Distanzhülse überbrückbar. Dazu weist die Distanzhülse die folgenden Merkmale auf: eine Außenhülse mit einer zentralen Gewindeöffnung, eine in der zentralen Gewindeöffnung verstellbar angeordnete hohlzylindrische Innenhülse, die an einer radialen Außenseite ein Außengewinde passend zu einem Innengewinde der Gewindeöffnung aufweist, und ein sich axial von einer Stirnseite der Außenhülse erstreckender Axialkragen, an dem drehfest eine sich radial erstreckende Anschlagscheibe angeordnet ist, und die Anschlagscheibe umfasst zumindest ein sich in Richtung Außenhülse in einen Bereich zwischen Anschlagscheibe und Außenhülse erstreckendes Befestigungsmerkmal, mit dem in einer Öffnung des ersten Bauteils eine formschlüssige Drehverriegelung und/oder eine kraftschlüssige Drehverriegelung herstellbar ist.

In bekannter Weise besteht die verstellbare Distanzhülse aus einer Außenhülse mit einer Gewindeöffnung, in der durch Drehen eine hohlzylindrische Innenhülse versetzbar angeordnet ist. Über diese Drehung in der oben genannten Gewindeverbindung wird die passende Länge der Distanzhülse eingestellt. An einer dem ersten Bauteil zugewandten Seite definiert die Distanzhülse einen Bereich, vorzugsweise in Form eines Befestigungsspalts mithilfe eines Axialkragens. Die eine radiale Begrenzungsfläche des Befestigungsspalts wird durch die sich radial erstreckende Anschlagscheibe definiert. Die andere Begrenzungsfläche des Befestigungsspalts bildet die axiale Stirnseite der Außenhülse. Da die Distanzhülse bevorzugt durch ein axiales Einsetzen und nachfolgendes Drehen um ihre Längsachse in der Bauteilöffnung befestigt wird, wird der Rand der Bauteilöffnung im Befestigungsspaltbereich zwischen Anschlagscheibe und Stirnseite der Au-βenhülse aufgenommen. Basierend auf dieser Drehung um die Längsachse der Distanzhülse greift das Befestigungsmerkmal, das an der Anschlagscheibe vorgesehen ist, drehungshemmend in die Bauteilöffnung ein. Daher ist nach diesem Eingriff bzw. nach diesem Verriegeln ein Lösen bevorzugt nur noch über ein Zerstören der Distanzhülse oder der Anschlagscheibe möglich. Entsprechend wird dann bevorzugt eine neue Anschlagscheibe am Axialkragen befestigt, um die Außenhülse erneut installieren zu können. Neben einer formschlüssigen Drehverriegelung ist es ebenfalls bevorzugt, dass aufgrund der Drehung der Distanzhülse diese drehfest am Rand der Bauteilöffnung des Bauteils geklemmt wird.

Gemäß der Erfindung weisen die Außenhülse und die Anschlagscheibe jeweils eine Außenkontur auf, die sich radial über den Axialkragen hinaus erstrecken, um den oben genannten Befestigungsspaltbereich zu bilden.

Gemäß einer weiteren bevorzugten Ausführungsform vorliegender Erfindung ist die Anschlagscheibe in axialer Richtung der Distanzhülse federnd ausgebildet und weist zumindest einen in den Befestigungsspaltbereich ragenden Drehverriegelungssteg auf. Somit ist bevorzugt der Drehverriegelungssteg an der Anschlagscheibe in Richtung der Außenhülse orientiert. Aufgrund dieser bevorzugten Konstruktion greift der Drehverriegelungssteg in eine unrunde Öffnung des ersten Bauteils zur Aufnahme des Axialkragens ein oder er ist in einer Verriegelungsöffnung oder in einer Verriegelungsnut des ersten Bauteils benachbart zur Bauteilöffnung verrastbar. Wie man anhand dieser Konstruktion erkennen kann, ist die äußere Form bzw. Kontur der Distanzhülse bevorzugt auf die unrunde Form der Bauteilöffnung abgestimmt. Dies ermöglicht, dass in einer Orientierung die Distanzhülse mit ihrem Befestigungsspalt in die Bauteilöffnung einsetzbar ist. Sobald die Distanzhülse nach dem Einsetzen um ihre Längsachse gedreht wird, unterstützt die unrunde Bauteilöffnung und die daran angepasste Außenkontur der Distanzhülse ein Befestigen der Distanzhülse in der Bauteilöffnung zusammen mit einem Formschluss in axialer Richtung. Dabei wird der Rand der Bauteilöffnung im Befestigungsspaltbereich aufgenommen, so dass der Drehverriegelungssteg durch seine weitere Rotationshemmung der Distanzhülse in der Bauteilöffnung ebenfalls auch eine axiale Befestigung der Distanzhülse in der Bauteilöffnung garantiert.

Gemäß einer weiteren bevorzugten Ausführungsform vorliegender Erfindung ist die Anschlagscheibe in axialer Richtung nicht federnd ausgebildet und sie weist zumindest eine in den Befestigungsspaltbereich ragende Auflaufschräge auf. Auch diese bevorzugte Ausführungsform der Distanzhülse wird in Kombination mit einer unrunden Öffnung des ersten Bauteils verwendet. Nachdem allein durch eine axiale Bewegung der Distanzhülse diese in die unrunde Bauteilöffnung eingesteckt worden ist, erzeugt ein Drehen um die Längsachse der Distanzhülse eine Reibschlussverbindung zwischen der Distanzhülse und dem ersten Bauteil. Dabei wird der Rand der Bauteilöffnung im ersten Bauteil im Befestigungsspaltbereich festgeklemmt, wobei die Auflaufschräge gegen die der Außenhülse abgewandte Seite des ersten Bauteils drückt. Somit wird der Rand der Bauteilöffnung des ersten Bauteils zwischen der Auflaufschräge und der den Befestigungsspaltbereich begrenzenden Stirnseite der Außenhülse geklemmt.

Gemäß einer weiteren bevorzugten Ausführungsform vorliegender Erfindung weist die Innenhülse der Distanzhülse eine gewindelose Durchgangsöffnung und mindestens ein Antriebsmittel auf, mit dem die Innenhülse in der Außenhülse drehbar und die Länge der Distanzhülse verstellbar ist. Weiterhin bevorzugt ist das Antriebsmittel der Innenhülse innerhalb der Durchgangsöffnung mithilfe einer unrunden inneren Kontur, vorzugsweise einer Mehrkantkontur, angeordnet. Basierend auf dieser Konstruktion ist mit einem Inbusschlüssel in das Innere der Distanzhülse eingreifbar, wobei die Innenkontur der Durchgangsöffnung der Innenhülse eine formschlüssige Drehverbindung mit dem eingesetzten Inbusschlüssel herstellt. Natürlich sind auch alle anderen Konturen für die Durchgangsöffnung der Innenhülse bevorzugt, mit denen eine formschlüssige Rotationsverbindung mit einem entsprechend geformten Werkzeug realisierbar sind.

Weiterhin bevorzugt ist das Antriebsmittel der Innenhülse an einer axialen Stirnseite der Innenhülse angeordnet, welches eine formschlüssige Drehverbindung mit einem Werkzeug ermöglicht. In diesem Zusammenhang ist eine Verzahnung zwischen der axialen Stirnseite der Innenhülse und einem Werkzeug oder ein formschlüssiger Eingriff oder Angriff des Werkzeugs im Sinne einer Nut-Feder-Verbindung bevorzugt, da diese ein verlässliches Drehen der Innenhülse innerhalb der Außenhülse ermöglichen.

Gemäß einer weiteren bevorzugten Ausführungsform vorliegender Erfindung ist das Antriebsmittel der Innenhülse an der radialen Außenseite der Innenhülse angeordnet, die eine Mehrkant- oder eine unrunde Kontur mit einer Mehrzahl radialer Erhebungen aufweist, auf denen das Außengewinde der Innenhülse angeordnet ist, während zwischen benachbarten radialen Erhebungen ein Freiraum als Antriebsmittel zum Eingriff bzw. Angriff eines Werkzeugs vorliegt. Mithilfe dieser bevorzugten Ausgestaltung der Außenseite der Innenhülse realisiert die Außenseite der Innenhülse gleichzeitig zwei Funktionen. Die eine Funktion besteht in der Gewährleistung des Gewindeeingriffs in das Innengewinde der Außenhülse. Die weitere Funktion gewährleistet Eingriffs- bzw. Angriffsmöglichkeiten für ein Werkzeug, so dass die Innenhülse um die Längsachse der Distanzhülse drehbar ist. So ist es bspw. bevorzugt, die Außenkontur der Innenhülse als Dreikant, Vierkant oder Sechskant vorzusehen. Dabei befinden sich jeweils auf den radial äußersten Kantenflächen die Gewindegänge zum Eingriff in das Innengewinde der Außenhülse. Zwischen den sich radial erhebenden Gewindekanten stehen ausreichend große Freiräume zur Verfügung, in die ein Werkzeug zum Drehen der Innenhülse um seine Längsachse eingreifen kann.

Gemäß einer weiteren bevorzugten Ausführungsform vorliegender Erfindung wird der Werkzeugeingriff bzw. Werkzeugangriff nur von der axialen Stirnseite der Innenhülse gewährleistet, die dem Befestigungsspaltbereich zugewandt ist. Natürlich ist es ebenfalls bevorzugt, auch von der dem Befestigungsspaltbereich gegenüberliegenden axialen Stirnseite der Innenhülse mit dem Werkzeug in die zur Drehung vorgesehenen Freiräume einzugreifen. In gleicher Weise sind auch die stirnseitigen Antriebsmittel an beiden oder nur an einer axialen Stirnseite der Innenhülse anordenbar.

Gemäß einer weiteren bevorzugten Ausführungsform vorliegender Erfindung weist die Innenhülse eine gewindelose Durchgangsöffnung und kein Antriebsmittel auf, wobei die Innenhülse manuell oder über eine Reibschlussverbindung zwischen einem Werkzeug und einer Innenwand der Durchgangsöffnung drehbar ist. Um die Distanzhülse auf einen Abstand zwischen zwei miteinander zu verbindenden Bauteilen passend einstellen zu können, wird die Innenhülse entsprechend in die Außenhülse eingeschraubt. Das für die Drehung der Innenhülse erforderliche Drehmoment, vorzugsweise eines Werkzeugs, wird über eine Wirkverbindung zwischen Werkzeug oder Befestigungsschraube und Innenhülse auf die Innenhülse übertragen.

Zur bevorzugten Erzeugung einer reibschlüssigen Wirkverbindung umfasst die Innenhülse mindestens einen ringförmigen elastischen Mitschlepper, der die Durchgangsöffnung der Innenhülse verengt. Dies führt dazu, dass der Mitschlepper und somit die Innenhülse mit der Befestigungsschraube während des Eindrehens der Befestigungsschraube in die Distanzhülse mitgedreht wird, bis die Innenhülse am zweiten Bauteil anliegt. Der Begriff Innenhülse umfasst auch einen oder mehrere radiale elastische Ringe, wie z. B. O-Ringe oder radiale Dichtringe, die in der Durchgangsöffnung in bevorzugt an deren Form angepasste Nuten eingeformt und angeordnet sind. Bei mehreren Ringen könnten die einzelnen Nuten dabei im Durchmesser auch so verringert werden, dass die einzelnen Ringe in der Funktion einer Innenhülse mit mehreren Dichtkanten und einem leichten Einführkonus in Montagerichtung weitgehend entsprechen.

Der sich aus der Anlage am zweiten Bauteil ergebende Widerstand gegen ein weiteres Versetzen der Innenhülse in axialer Richtung sorgt dafür, dass die Befestigungsschraube den Reibschluss mit dem Mitschlepper überwindet. Entsprechend wird die Befestigungsschraube weiter in die Mutter eingeschraubt, ohne die Innenhülse über den Mitschlepper mitzudrehen.

Erfindungsgemäß bevorzugt ist an dem Mitschlepper eine radial einwärts ragende Dichtlippe vorgesehen, die am Mitschlepper umlaufend angeordnet sowie abdichtend an einer Befestigungsschraube anlegbar ist. Während der elastische Mitschlepper eine vereinfachte Einstellung der Länge der Distanzhülse in Kombination mit dem Einschrauben der Befestigungsschraube zulässt, realisiert er mit Hilfe der umlaufenden Dichtlippe eine Abdichtung der Durchgangsöffnung der Innenhülse. Dazu ragt die Dichtlippe radial einwärts und verläuft entlang eines inneren Umfangs des Mitschleppers. Somit verengt die Dichtlippe die Durchgangsöffnung der Innenhülse derart, dass sie umlaufend und durchgängig an der Befestigungsschraube anliegt, sobald diese in der Distanzhülse installiert ist. Auf diese Weise ergänzen sich eine Labyrinthdichtung zwischen Außengewinde der Innenhülse und Innengewinde der Außenhülse sowie die Abdichtung zwischen Befestigungsschraube und Mitschlepper mit Dichtlippe. Dadurch werden das Eindringen von Schmutz, Staub und Flüssigkeit in die verstellbare Distanzhülse verringert und die Verbindung zwischen den mindestens zwei Bauteilen geschützt.

Weiterhin bevorzugt weist die Innenhülse benachbart zu einer Stirnseite einen Einführkonus in die Durchgangsöffnung der Innenhülse auf. Über diesen Einführkonus ist ein Reibschluss mit einem Drehwerkzeug herstellbar, sodass die Innenhülse auch ohne Formschluss mit einem Werkzeug gedreht und verstellt werden kann. Ein bevorzugtes Werkzeug ist beispielsweise ein Stift mit spitz zulaufendem elastischem Kegel. Der elastische Kegel ist in seinem maximalen Durchmesser bevorzugt größer ausgebildet als ein Innendurchmesser der Durchgangsöffnung der Innenhülse. Auf diese Weise bildet ein Einstecken des elastischen Kegels eine bevorzugte Reibschlussverbindung mit der Innenhülse, so dass sich die Innenhülse mit dem Drehwerkzeug in die Außenhülse eindrehen lässt.

Vorliegende Erfindung offenbart zudem eine Verbindung zwischen zumindest einem ersten Bauteil und einer verstellbaren Distanzhülse gemäß den oben beschriebenen Konstruktionsalternativen, in der das erste Bauteil eine unrunde Bauteilöffnung umfasst und ein Rand der Bauteilöffnung in einem Befestigungsspalt der Distanzhülse allein über ein axiales Einsetzen und anschließendes Drehen der Distanzhülse in der Bauteilöffnung befestigt ist.

In diesem Zusammenhang ist es bevorzugt, dass eine Außenkontur der Außenhülse der Distanzhülse an die unrunde Bauteilöffnung derart angepasst ist, dass in einer ersten Drehwinkelorientierung um eine Längsachse der Distanzhülse ein axiales Einsetzen der Distanzhülse in die unrunde Bauteilöffnung gewährleistet ist, während in einer zweiten Drehwinkelorientierung der Distanzhülse ein axiales Entfernen der Distanzhülse aus der unrunden Bauteilöffnung durch Formschluss verhindert ist.

Gemäß dieser erfindungsgemäß bevorzugten Konstruktionsweise wird die verstellbare Distanzhülse durch ein simples lineares Einsetzen bzw. Einstecken und Drehen um die Längsachse in der Bauteilöffnung verriegelt. Die Verriegelung erfolgt mithilfe von Formschluss basierend auf den oben beschriebenen konstruktiven Merkmalen. Konstruktive Grundlage für diesen Formschluss bildet die unrunde Bauteilöffnung, da gerade bei einem Drehen der Distanzhülse innerhalb der unrunden Bauteilöffnung Freiräume entstehen, in die eine formschlüssige Drehverriegelung, wie vorzugsweise ein Drehverriegelungssteg, eingreifen kann. Gleichzeitig sorgt die unrunde Bauteilöffnung dafür, dass ein Rand der Bauteilöffnung innerhalb des Befestigungsspaltbereichs derart angeordnet wird, dass zumindest in Teilbereichen der Bauteilöffnung dieser Rand zwischen der axialen Stirnseite der Außenhülse und der Anschlagscheibe der Distanzhülse gehalten wird.

Gemäß einer weiteren bevorzugten Ausführungsform zeichnet sich die oben genannte Verbindung dadurch aus, dass sich die Distanzhülse über eine drehend verstellbare Innenhülse an einem zweiten Bauteil abstützt und das erste und das zweite Bauteil über eine Befestigungsschraube miteinander verbunden sind, die sich durch die Distanzhülse, im Speziellen durch eine Durchgangsöffnung der Innenhülse, erstreckt.

Des Weiteren umfasst vorliegende Erfindung eine Verbindung zwischen einem ersten und einem zweiten Bauteil mit Hilfe der verstellbaren Distanzhülse in ihren bevorzugten Ausführungsformen, wobei sich durch die Distanzhülse eine Befestigungsschraube erstreckt.

Vorliegende Erfindung umfasst zudem ein Verfahren zur Installation einer Distanzhülse gemäß den oben beschriebenen Konstruktionsalternativen, in einer unrunden Bauteilöffnung eines ersten Bauteils. Dieses Verfahren weist die folgenden Schritte auf: Einstecken einer Außenhülse der Distanzhülse, insbesondere eine Außenhülse mit vormontierter Innenhülse und vorzugsweise eine auf kurze Länge zusammengeschraubte Distanzhülse, in die unrunde Bauteilöffnung, deren Außenkontur an die unrunde Bauteilöffnung angepasst ist, bis sich ein Rand der unrunden Bauteilöffnung an einer Anschlagscheibe der Distanzhülse abstützt, Drehen der Außenhülse um eine Längsachse, so dass der Rand der unrunden Bauteilöffnung in einem Befestigungsspaltbereich zwischen der Anschlagscheibe und der Außenhülse aufgenommen wird und dabei Einrasten eines in den Befestigungsspaltbereich ragenden Drehverriegelungsstegs in die unrunde Bauteilöffnung oder in eine Verriegelungsöffnung oder in eine Verriegelungsnut am ersten Bauteil und/oder Festklemmen einer in den Befestigungsspaltbereich ragenden Auflaufschräge an einer der Auflaufschräge zugewandten Seite des ersten Bauteils. Erfindungsgemäß bevorzugt ist das erste Bauteil ein Träger im Dachbereich einer Fahrzeugkarosserie, an dem über eine Innenhülse der Distanzhülse eine Dachkarosserie abgestützt wird, wobei die Distanzhülse von nur einer Seite gegenüber der Dachkarosserie in der Bauteilöffnung installiert wird. Basierend auf den oben beschriebenen Konstruktionsalternativen der Distanzhülse und des Trägers ist eine nur einseitige Zugänglichkeit der Distanzhülse aus dem Fahrzeuginnenraum ausreichend, um die Distanzhülse passend in Ihrer Länge einzustellen. Dabei ist es von Vorteil, dass sich die Distanzhülse in der unrunden Bauteilöffnung des Trägers drehfest verriegelt, so dass kein zusätzliches Werkzeug zur Fixierung und Vermeidung einer Drehung der Außenhülse der Distanzhülse erforderlich ist.

Gemäß weiterer bevorzugter Ausführungsformen vorliegender Erfindung umfasst das obige Verfahren die weiteren Schritte: Drehen der Innenhülse der Distanzhülse zur Überbrückung eines Abstands zwischen dem ersten Bauteil und einem zweiten Bauteil mit (i) einem Werkzeug, das eine Reibschlussverbindung in einer Durchgangsöffnung der Innenhülse ohne Antriebsmittel herstellt, oder (ii) ein Werkzeug, das eine formschlüssige Drehverbindung mit einem Antriebsmittel an einer axialen Stirnseite der Innenhülse herstellt, oder (iii) einem Werkzeug, das eine formschlüssige Drehverbindung mit einem Antriebsmittel an einer radialen Innenseite oder einer radialen Außenseite der Innenhülse herstellt.

Zudem ist es im Rahmen des erfindungsgemäßen Verfahrens bevorzugt, eine abdichtende Verbindung zwischen der Befestigungsschraube und einer um die Befestigungsschraube umlaufenden Dichtlippe in der Durchgangsöffnung der Innenhülse zu erzeugen. Auf diese Weise wird zumindest das Innere der Durchgangsöffnung gegen ein Eindringen von Verschmutzung und/oder Flüssigkeit geschützt, wodurch Wartungsaufwand und Korrosion reduziert sowie Haltbarkeit der verstellbaren Distanzhülse und der hergestellten Verbindung verbessert werden.

### 4. Kurze Beschreibung der begleitenden Zeichnungen

Die bevorzugten Ausführungsformen vorliegender Erfindung werden unter Bezugnahme auf die begleitenden Zeichnungen näher erläutert. Es zeigen:
- Fig. 1: eine perspektivische Darstellung einer ersten bevorzugten Ausführungsform der erfindungsgemäßen Distanzhülse,
- Fig. 2: die Distanzhülse gemäß Fig. 1, die durch Herausschrauben der Innenhülse aus der Außenhülse verlängert worden ist,
- Fig. 3: eine Explosionsdarstellung der Distanzhülse aus Fig. 1 bestehend aus Außenhülse und Innenhülse,
- Fig. 4: eine weitere bevorzugte Ausführungsform der Distanzhülse mit einer umgestalteten Innenhülse,
- Fig. 5: die Innenhülse der Distanzhülse gemäß Fig. 4,
- Fig. 6: eine bevorzugte Installationssequenz, bevor die Distanzhülse in eine Bauteilöffnung eingesetzt wird,
- Fig. 7: die bevorzugte Distanzhülse in einer perspektivischen Ansicht von unten, nachdem sie axial in die Bauteilöffnung eingesteckt worden ist,
- Fig. 8: die bevorzugte Distanzhülse in einer seitlichen perspektivischen Ansicht, nachdem sie innerhalb der Bauteilöffnung um ihre Längsachse gedreht worden ist,
- Fig. 9: eine Schnittdarstellung einer bevorzugten Ausführungsform der Distanzhülse installiert in der Bauteilöffnung des ersten Bauteils,
- Fig. 10: eine Schnittdarstellung einer bevorzugten Ausführungsform der Distanzhülse in einem installierten Zustand zwischen dem ersten und zweiten Bauteil, bevor die Befestigungsschraube eingeschraubt worden ist,
- Fig. 11: eine perspektivische Ansicht einer Bauteilöffnung im zweiten Bauteil, in der ein axiales Ende der bevorzugten Innenhülse erkennbar ist,
- Fig. 12: eine perspektivische Ansicht der bevorzugten Distanzhülse in den Bauteilöffnungen des ersten und zweiten Bauteils,
- Fig. 13: eine perspektivische Darstellung einer weiteren bevorzugten Ausführungsform der erfindungsgemäßen Distanzhülse,
- Fig. 14: eine perspektivische Darstellung einer weiteren bevorzugten Ausführungsform der Innenhülse in einer Explosionsdarstellung mit einem installierbaren elastischen Reibelement,
- Fig. 15: eine stirnseitige Ansicht der Distanzhülse aus Fig. 13,
- Fig. 16: eine Schnittdarstellung der Distanzhülse aus Fig. 15 entlang der Linie A - A,
- Fig. 17: eine erste bevorzugte Sequenz eines Verbindungsverfahrens von zwei Bauteilen mit der bevorzugten Distanzhülse in einer seitlichen Schnittdarstellung,
- Fig. 18: eine zweite bevorzugte Sequenz eines Verbindungsverfahrens von zwei Bauteilen mit der bevorzugten Distanzhülse und teilweise eingeschraubter Befestigungsschraube in einer seitlichen Schnittdarstellung,
- Fig. 19: eine dritte bevorzugte Sequenz eines Verbindungsverfahrens von zwei Bauteilen mit der bevorzugten Distanzhülse im vollständig installierten Zustand in einer seitlichen Schnittdarstellung,
- Fig. 20: eine perspektivische Darstellung einer weiteren bevorzugten Ausführungsform der erfindungsgemäßen Distanzhülse in einer seitlichen Schnittdarstellung mit einem bevorzugten Eindrehwerkzeug,
- Fig. 21: eine erste bevorzugte Sequenz eines Verbindungsverfahrens von zwei Bauteilen mit der bevorzugten Distanzhülse gemäß Fig. 20 in einer seitlichen Schnittdarstellung,
- Fig. 22: eine zweite bevorzugte Sequenz eines Verbindungsverfahrens von zwei Bauteilen mit der bevorzugten Distanzhülse gemäß Fig. 20 während des Einstellens der Innenhülse mit dem bevorzugten Eindrehwerkzeug in einer seitlichen Schnittdarstellung,
- Fig. 23: eine dritte bevorzugte Sequenz eines Verbindungsverfahrens von zwei Bauteilen mit der bevorzugten Distanzhülse gemäß Fig. 20 mit vollständig eingestellter Innenhülse zur Überbrückung eines Abstands zwischen den zwei miteinander zu verbindenden Bauteilen in einer seitlichen Schnittdarstellung und
- Fig. 24: ein Flussdiagramm einer bevorzugten Ausführungsform eines Verbindungsverfahrens von zwei Bauteilen mit der Distanzhülse gemäß den bevorzugten Ausführungsformen.

### 5. Detaillierte Beschreibung der bevorzugten Ausführungsformen

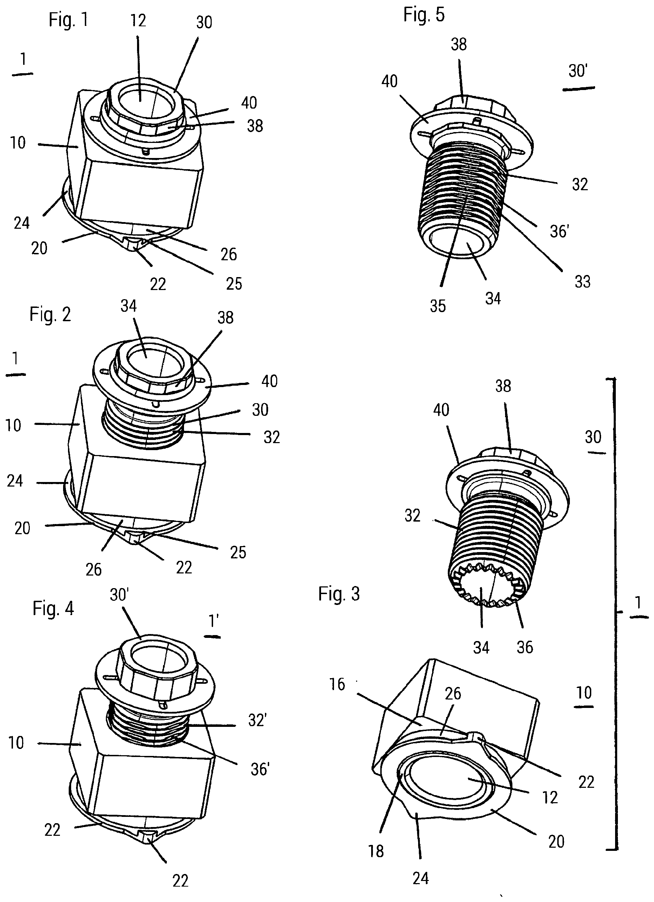

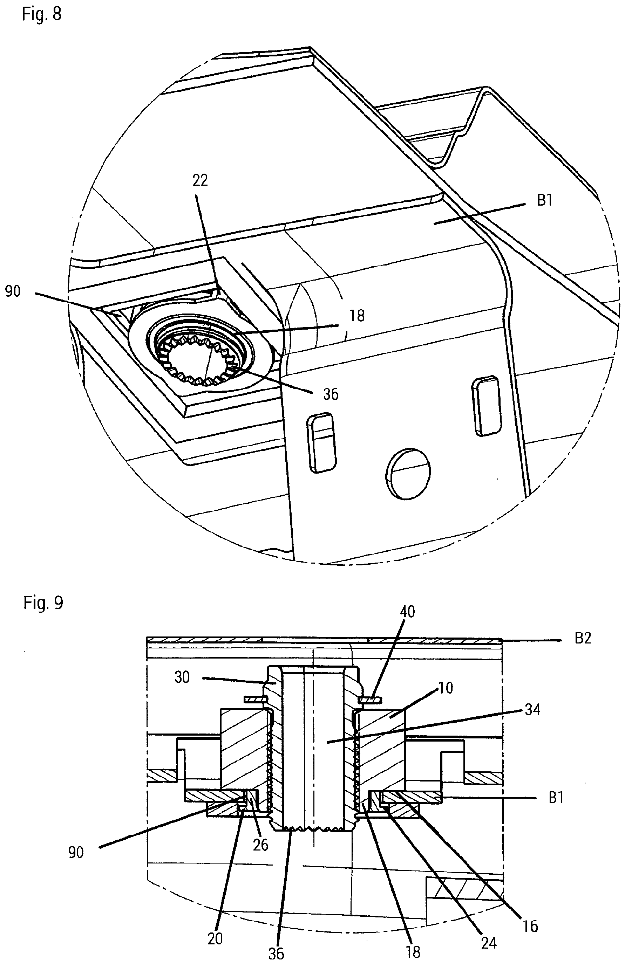

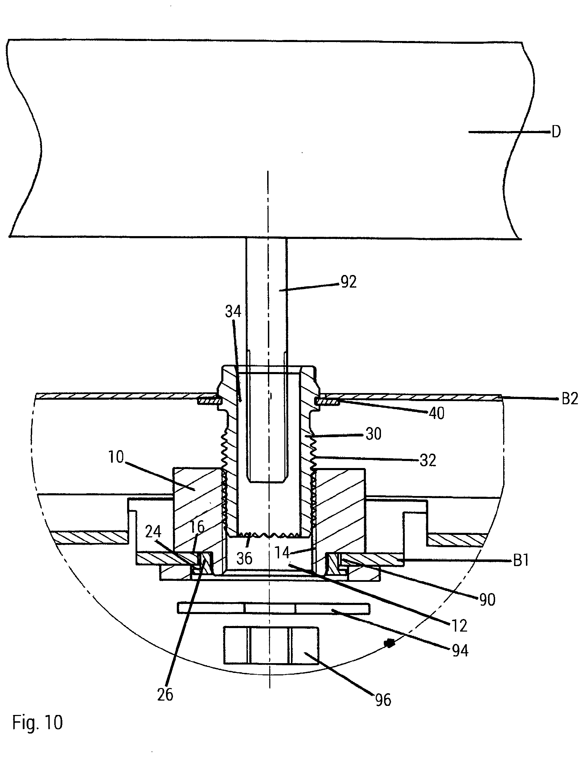

Die Figuren 1 bis 5 zeigen bevorzugte Ausführungsformen der verstellbaren Distanzhülse 1; 1' im nicht installierten Zustand. In den Figuren 9 und 10 sind Schnittdarstellungen bevorzugter Ausführungsformen der verstellbaren Distanzhülse 1; 1' im teilweise eingebauten Zustand dargestellt. Die verstellbare Distanzhülse 1; 1' umfasst eine Außenhülse10 mit einer bestimmten Außenkontur und einer zentralen Gewindeöffnung 12. In axialer Richtung der Außenhülse10, also in Verlaufsrichtung der Gewindeöffnung 12, erstreckt sich von einer ersten radial verlaufenden Stirnseite 16 ein Axialkragen 18. An dem Axialkragen 18 ist eine Anschlagscheibe 20 angeordnet. Gemäß unterschiedlicher bevorzugter Ausführungsformen vorliegender Erfindung ist die Anschlagscheibe 20 drehfest mit dem Axialkragen 18 vorzugsweise durch Kleben, über eine Gewindeverbindung, durch Aufschrumpfen durch eine nicht-rotationssymmetrische Aufnahmenut mit komplementärer Innenbohrung der Scheibe oder auf andere Weise verbunden. Es ist ebenfalls bevorzugt, in die an den Axialkragen 18 angrenzende Stirnseite 16 der Außenhülse 10 eine runde Axialnut einzuformen. In dieser ist dann der Befestigungsrand 26 einsetzbar und durch Kleben oder eine Presspassung oder Schweißen befestigbar. Gemäß einer weiteren bevorzugten Ausführungsform ist die Anschlagscheibe 20 integral mit dem Axialkragen 18 ausgebildet. Vorzugsweise weist die Anschlagscheibe 20 einen Befestigungsring 26 auf, der fest auf dem Axialkragen 18 sitzt. Des Weiteren umfasst die Anschlagscheibe 20 eine Befestigungs- oder Anlagefläche 24, die der Stirnseite 16 der Außenhülse 10 zugewandt ist. Die Stirnseite 16 und die Befestigungsfläche 24 liegen zumindest teilweise einander gegenüber und definieren zwischen sich einen Befestigungsspalt oder einen Befestigungsspaltbereich zur Aufnahme des ersten Bauteils B1. Als Befestigungsspaltbereich wird allgemein der Raum verstanden, der axial durch die Stirnseite 16 und der Befestigungsrand 26 begrenzt ist. In radialer Richtung wird von keiner Begrenzung des Begrenzungsspaltbereichs ausgegangen, so dass sich dieser radial auch über die Außenhülse hinaus erstrecken kann.

Des Weiteren ist bevorzugt auf der Befestigungsfläche 24 mindestens ein Befestigungsmerkmal 22 angeordnet. Dieses Befestigungsmerkmal 22 ist gemäß einer bevorzugten Ausführungsform vorliegender Erfindung ein Drehverriegelungssteg, der in eine Bauteilöffnung 90 eingreift (siehe unten), die im Befestigungsspaltbereich liegt.

Das Befestigungsmerkmal 22, das gemäß einer weiteren bevorzugten Ausführungsform vorliegender Erfindung (nicht gezeigt) auch aus einer Auflaufschräge bestehen kann, ist auf einer zungenartigen radialen Erweiterung 25 der Befestigungsfläche 24 angeordnet. Allgemein ist es von bevorzugter Bedeutung, dass die Stirnfläche 16 der Außenhülse 10 wie auch die Befestigungsfläche 26 hier in Kombination mit der radialen Erweiterung 25, eine unrunde Form aufweist, die nicht einander gegenüberliegend symmetrisch sondern versetzt um einen Drehwinkel zueinander angeordnet sind. Auf diese Weise dient der oben definierte Befestigungsspaltbereich der Halterung eines Rands der Bauteilöffnung 90, indem sich die Stirnfläche 16 an einer Seite des Bauteils B1 und die Befestigungsfläche 24 an der gegenüberliegenden Seite des Bauteils B1 abstützen, wobei der Rand der Befestigungsöffnung 90 die beiden Bauteilseiten verbindet.

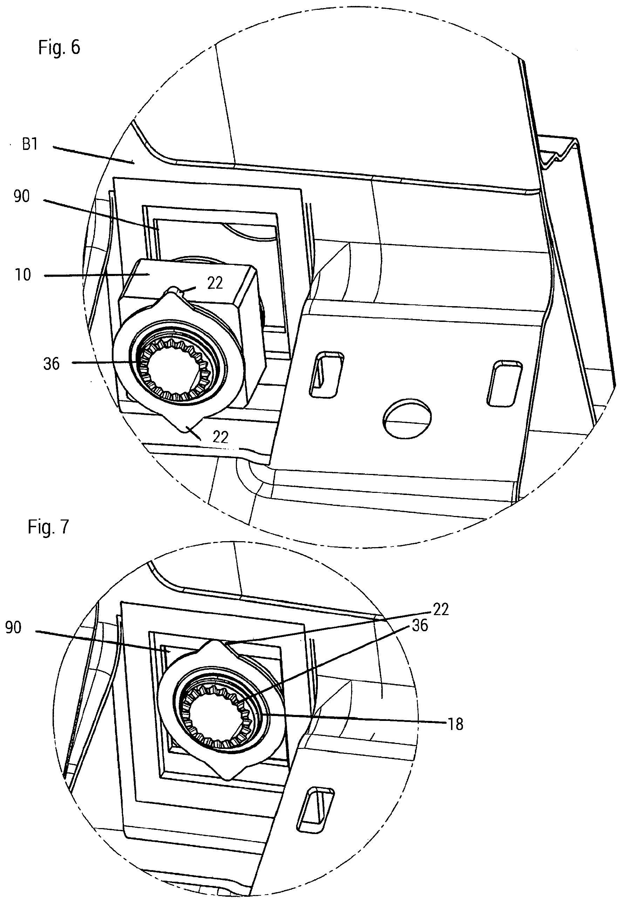

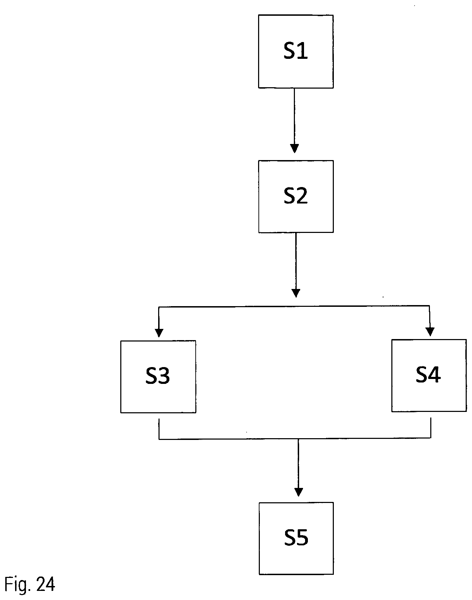

Gemäß einer weiteren bevorzugten Ausführungsform vorliegender Erfindung ist die unrunde Bauteilöffnung 90 in ihrer Form an die Außenkontur der Außenhülse 10 angepasst. Dadurch ist die Außenhülse 10 durch eine geradlinige Bewegung in die Bauteilöffnung 90 einsetzbar, bis die Befestigungsfläche 24 und/oder die sich davon erstreckenden Befestigungsmerkmale am Bauteil B1 abstützen (Schritt S1, siehe Fig. 24). Im vorliegenden Fall (siehe Figuren 6 und 7), weist die Außenhülse 10 vorzugsweise eine viereckige Außenkontur auf, während die Bauteilöffnung 90 im Bauteil B1 ebenfalls eine daran angepasste viereckige Form besitzt. Das Abstützen der Befestigungsfläche 24 und/oder der Befestigungsmerkmale ist durch die bevorzugt asymmetrische Anordnung von Stirnfläche 16 und Befestigungsfläche 24 möglich. Wird nun die Distanzhülse 1; 1' um ihre Längsachse um einen bestimmten Winkel gedreht (Schritt S2, siehe Fig. 24), wird die symmetrische Ausrichtung zwischen der Außenhülse10 und der Bauteiloberfläche 90 aufgehoben. Gleichzeitig entstehen Freiräume der Bauteilöffnung 90 im Bereich des Befestigungsmerkmals 22, hier bevorzugt der Drehverriegelungssteg 22, der dadurch in die Bauteilöffnung 90 einschnappen kann (Schritt S3). Somit wird die Distanzhülse 1; 1' in axialer Richtung zwischen Stirnseite und Befestigungsfläche 24 fixiert. Der Eingriff des Drehverriegelungsstegs 22 in die unrunde Bauteilöffnung 90 verhindert ein Verdrehen und damit ein Lösen der Außenhülse10 aus der Bauteilöffnung 90 (siehe Figuren 6 bis 8).

Es ist ebenfalls bevorzugt, als Befestigungsmerkmal 22 eine Auflaufschräge (nicht gezeigt) vorzusehen. Bei Drehung um die Längsachse der Distanzhülse 1; 1' dient sie der Verspannung bzw. der Befestigung der Distanzhülse 1; 1' über einen Presssitz am Bauteil B1 (Schritt S4). Dabei wird vermieden, dass die Auflaufschräge (nicht gezeigt) in einen Freiraum der unrunden Bauteilöffnung 90 einschnappt.

Innerhalb der Gewindeöffnung 12 ist eine Innenhülse 360; 30' durch Drehung in ihrer Position axial versetzbar (Schritt S5). Dazu ist an einer radialen Außenseite ein Außengewinde 32 vorgesehen. Im Inneren umfasst die Innenhülse 30; 30' eine Durchgangsöffnung 34 zur Aufnahme einer Befestigungsschraube 92. Erfindungsgemäß bevorzugt umfasst die Durchgangsöffnung 34 keinen Mitschlepper, so dass die Länge der Distanzhülse nicht über eine Drehung der Befestigungsschraube 92 einstellbar ist.

Gemäß einer bevorzugten Ausführungsform vorliegender Erfindung umfasst die Innenhülse 30; 30' an einer der Außenhülse10 zugewandten axialen Stirnseite ein Antriebsmittel 36. In gleicher Weise ist es bevorzugt, an der gegenüberliegenden Stirnseite alternativ dazu oder ergänzend ein Antriebsmittel (nicht gezeigt) vorzusehen.

Wie man in den Figuren und 6 bis 10 erkennen kann, besteht das Antriebsmittel 36 bevorzugt aus einer Verzahnung. Greift ein passend dazu geformtes Werkzeug in die Verzahnung ein, entsteht eine formschlüssige Drehverbindung zur Drehung der Innenhülse 30; 30' innerhalb der Außenhülse10. Wie anhand der Figuren 6 bis 10 deutlich wird, ist die Länge der Distanzhülse 1; 1' durch den einseitigen Zugriff von Seiten des Bauteils B1 verstellbar. Wird die Distanzhülse 1; 1' in einem Träger B1 eines Fahrzeugrahmens befestigt, ist bevorzugt die Installation der Distanzhülse allein aus dem Innenraum des Fahrzeugs möglich.

Gemäß einer weiteren bevorzugten Ausführungsform vorliegender Erfindung weist die Innenhülse 30; 30' eine mehrkantige Außenkontur 33, 35, 36' auf. Die Mehrkantkontur umfasst bevorzugt eine Mehrzahl radialer Erhebungen 33. Auf den radial äußeren Bereichen der Erhebungen 33; 33' ist das Außengewinde 32 passend zur Gewindeöffnung 12 vorgesehen. Zwischen den Erhebungen 33; 33' befinden sich axiale Freiräume 35; 35' gerade auch im eingeschraubten Zustand in die Außenhülse10. Diese Freiräume 35; 35' dienen als Antriebsmittel 36; 36' für ein darin eingreifendes Werkzeug zum Drehen der Innenhülse 30; 30'. Diese Freiräume 35; 35' gewährleisten bevorzugt, dass die Innenhülse 30; 30' nur aus dem Fahrzeuginneren oder allgemein nur von einer Stirnseite der Distanzhülse 1; 1' verstellbar wäre.

Gemäß einer weiteren bevorzugten Ausführungsform vorliegender Erfindung umfasst die Durchgangsöffnung 34 ein inneres Antriebsmittel (nicht gezeigt), vorzugsweise in Form einer Mehrkantstruktur. Entsprechend kann man mit einem Vierkant- oder Inbusschlüssel darin eingreifen und die Länge der Distanzhülse 1; 1' verstellen.

Gemäß einer weiteren bevorzugten Ausführungsform vorliegender Erfindung weist die Innenhülse 30; in einem radialen Außenbereich benachbart zu einer Anlagescheibe 40 ein radial außen liegendes Antriebsmittel 38 auf. Dies wird bevorzugt durch eine Mehrkantstruktur gebildet. Mithilfe dieses Antriebsmittels 38 ist die Innenhülse 30; 30' über eine Öffnung im zweiten Bauteil B2 oder allgemein von der der Außenhülse10 abgewandten Seite einstellbar.

Gemäß einer weiteren bevorzugten Ausführungsform vorliegender Erfindung (nicht gezeigt) weist die Innenhülse 30; 30' kein Antriebsmittel auf. Zum Drehen der Innenhülse 30; 30' wird bevorzugt ein Werkzeug in die Durchgangsöffnung 34 eingeführt und eine lösbare Reibschlussverbindung mit der Innenhülse 30; 30' hergestellt. Nach abgeschlossener Drehung der Innenhülse 30; 30' bzw. Einstellung der Länge der Distanzhülse wird das Werkzeug aus der Durchgangsöffnung 34 entfernt.

Während des axialen Versetzens der Innenhülse 30; 30' in Richtung des zweiten Bauteils B2, vorzugsweise ein Dachhaut eines Kraftfahrzeugs, stellt die Anlagescheibe 40 einen Stützbereich am zweiten Bauteil B2 bereit. Dazu besteht die Anlagescheibe 40 bevorzugt aus einem flexiblen Kunststoff, die in einer Nut der Innenhülse 30; 30' angeordnet ist.

Die Figuren 6 bis 10 zeigen in einer bevorzugten Ausführungsform vorliegender Erfindung die Installation der Distanzhülse 1; 1' zwischen den Bauteilen B1 und B2. Wie man anhand von Figur 6 erkennen kann, ist die Bauteilöffnung 90 viereckig ausgebildet. Angepasst an die Form der Bauteilöffnung 90 ist auch die Kontur der Außenhülse10 viereckig. Die äußeren Abmessungen der Außenhülse10 sind etwas geringer als die der Bauteilöffnung 90, damit die Außenhülste10 in die Bauteilöffnung 90 einsetzbar ist. Aufgrund der viereckigen Form der Außenhülse10 stehen zumindest vier Eckbereiche der Stirnseite 16 zur Befestigung und Abstützung am Bauteil B1 bereit. Das hier beschriebene Verfahren gilt in gleicher Weise für die Distanzhülse 1'.

Die Anschlagscheibe 20 hat bevorzugt eine ovale oder elliptische Form. Dabei sind bevorzugt die Befestigungsmerkmale bzw. die Drehverriegelungsstege 22 nur so weit voneinander entfernt, wie die Diagonale der Bauteilöffnung 90 lang ist. Es ist ebenfalls bevorzugt, die Anschlagscheibe 20 rund auszubilden. In dieser Ausführungsform werden die Drehverriegelungsstege 20 auf radialen Erweiterungen 25 angeordnet, auf denen die Drehverriegelungsstege 22 ebenfalls nur maximal um die Länge der Diagonale der Bauteilöffnung 90 voneinander entfernt sind. Der Durchmesser der Anschlagscheibe 20 bzw. die radiale Ausdehnung senkrecht zur Verbindungslinie zwischen den Drehverriegelungsstegen 22 ist etwas größer als die Seitenlänge der quadratischen Bauteilöffnung 90. Damit ist gewährleistet, dass sich die Befestigungsfläche 24 auch bei Drehung der Außenhülse10 um ihre Längsachse an der der Außenhülse10 abgewandten Bauteilseite abstützt und nicht durch die Bauteilöffnung 90 versetzbar ist (siehe Fig. 7).

Nachdem die Außenhülse10 in die Bauteilöffnung 90 eingesetzt worden ist, wird die Anschlagscheibe 20 in drehfester Verbindung mit der Außenhülse 10 so weit gedreht, dass die Drehverriegelungsstege 22 jeweils auf eine Ecke der Bauteilöffnung 90 ausgerichtet sind und dort in den Freiraum der Bauteilöffnung 90 einrasten (siehe Fig. 8). Gleichzeitig stützt sich weiterhin die Befestigungsfläche 24 am Bauteil B1 ab, ohne durch die Bauteilöffnung 90 zu gelangen.

Nachdem die Distanzhülse 1; 1' in der Bauteilöffnung 90 axial fest und drehfest installiert worden ist - dies ist auch in Fig. 9 dargestellt - wird die Innenhülse 30; 30' aus der Außenhülse10 heraus gedreht. Dies erfolgt erfindungsgemäß bevorzugt mit einer der oben beschriebenen Antriebsmittel nur einseitig durch die Bauteilöffnung 90.

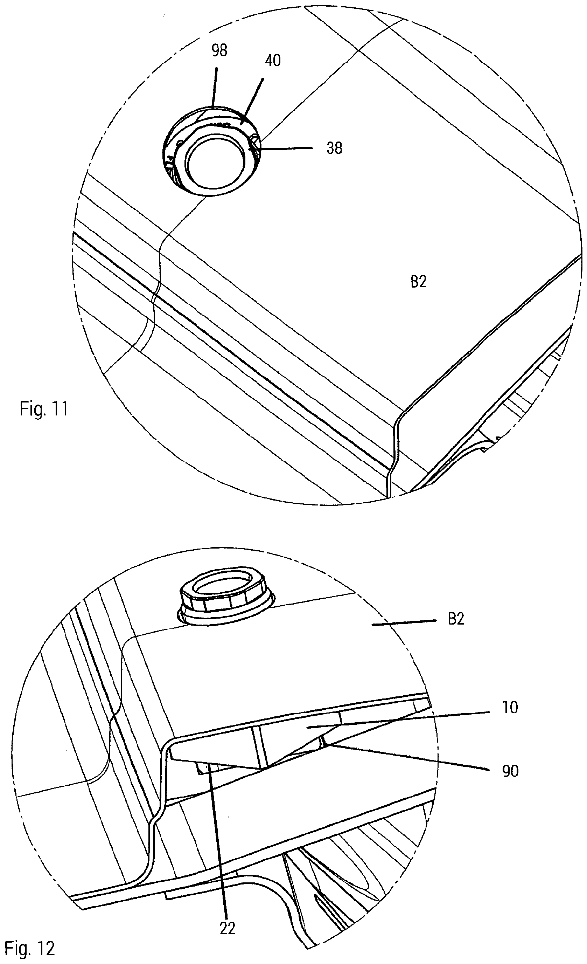

Gemäß einer weiteren bevorzugten Ausführungsform erfolgt die Drehung und Einstellung der Innenhülse 30; 30' beidseitig oder nur von der dem Bauteil B1 abgewandten Seite (siehe Figuren 11 und 12). Gemäß Figuren 11 und 12 wird die Innenhülse 30; 30' bevorzugt über das Antriebsmittel 38 oder durch ein innenliegendes Antriebsmittel in der Durchgangsöffnung 34 über eine Öffnung im Bauteil B2 eingestellt.

Die Einstellung der Innenhülse 30; 30' und somit der gewünschten Länge der Distanzhülse 1; 1' ist abgeschlossen, wenn die Anlagescheibe 40 am zweiten Bauteil B2, bspw. eine Dachhaut oder eine Dachkarosserie anliegt. Danach wird vorzugsweise eine Dachkonstruktion, eine Dachleiste, ein Dachgepäckträger oder ein anderes Karosserieteil D über die Befestigungsschraube 92 am Bauteil B1 festgeschraubt. Dazu wird eine Scheibe 94 mit Mutter 96 verwendet.

Die Installation der Distanzhülse 1; 1' ist in gleicher Weise mit den oben beschriebenen Antriebsmitteln realisierbar. Zudem ist es bevorzugt, die Distanzhülse aus Kunststoff, faserverstärktem Kunststoff oder Metall oder aus einer Kombination der genannten Materialien herzustellen. Kunststoff ist dabei als Materialwahl aufgrund des Herstellungsaufwands, seines Gewichts und der Flexibilität in der Kombination mit anderen Materialien und Umgebungsbedingungen bevorzugt.

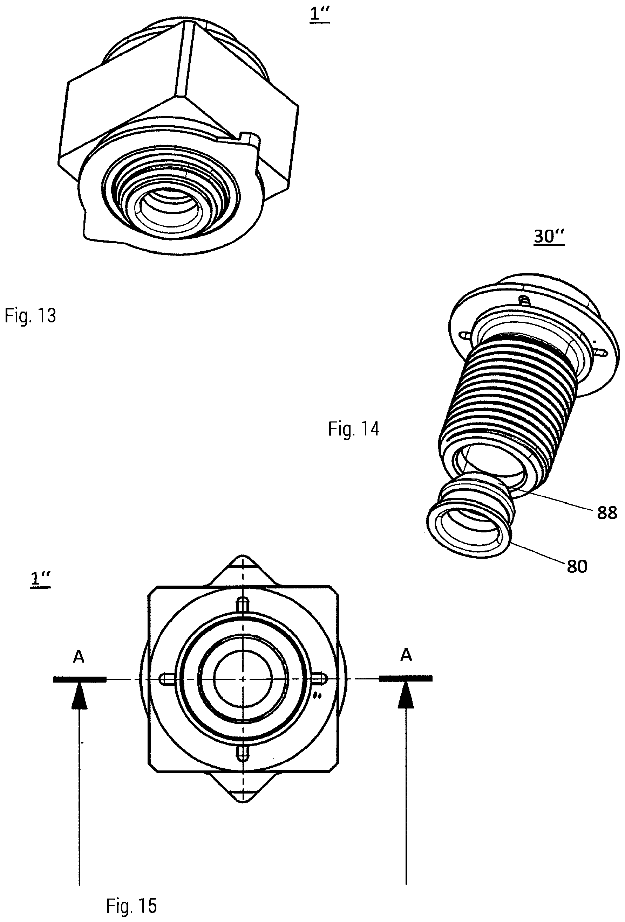

Eine weitere bevorzugte Ausführungsform der Distanzhülse 1" zeigt Fig. 13 in einer perspektivischen Ansicht. Im Unterschied zu den oben beschriebenen Konstruktionen der Distanzhülse 1; 1' weist die Distanzhülse 1" eine Innenhülse 30" mit einem Reibelement 80 auf. Abgesehen von dem Reibelement 80 umfasst die Innenhülse 30" eine Auswahl oder die jeweilige Kombination der konstruktiven Merkmale der oben beschriebenen Ausführungsformen der Innenhülse 30; 30'.

Angrenzend an die axiale Stirnseite der Innenhülse 30", die beim Einstellen der Länge der Distanzhülse 1" in die Außenhülse 10 hinein versetzt wird, ist das Reibelement 80 angeordnet. Das Reibelement 80 ist vorzugsweise ringförmig ausgebildet und besteht aus einem elastisch verformbaren Material, wie bspw. einem Elastomer oder Gummi. Das ringförmige Reibelement 80 ist in seinem Außendurchmesser derart an den Innendurchmesser der Innenhülse 30" angepasst, dass das Reibelement 80 nach einem bevorzugten Einpressen in das Innere der Innenhülse 30" darin kraftschlüssig gehalten wird. Vorzugsweise ist dazu der Außendurchmesser des Reibelements 80 etwas größer ausgelegt als der Innendurchmesser der Innenhülse 30". Alternativ oder ergänzend dazu weist die Innenwand der Innenhülse 30" einen umlaufenden Radialsteg 39 oder eine Mehrzahl gleichmäßig beabstandeter Radialstege 39 auf, die/der eine Hinterrastung für das Reibelement 80 bilden/bildet. Um den Halt des Reibelements 80 am Radialsteg 39 zu unterstützen, ist an der radialen Außenseite des ringförmigen Reibelements 80 bevorzugt eine umlaufende radiale Vertiefung oder Nut 82 vorgesehen. Die radiale Vertiefung 82 wird in axialer Richtung angrenzend an die Stirnseite der Innenhülse 30" durch einen bevorzugten umlaufenden Radialkragen 84 begrenzt. Auf diesen Radialkragen 84 kann verzichtet werden, wenn das Reibelement 80 nicht stirnseitig an der Innenhülse 30", sondern in axialer Richtung versetzt in das Innere der Innenhülse 30" angeordnet ist.

Weiterhin bevorzugt sind mehrere radiale elastische Ringe, wie z. B. O-Ringe oder radiale Dichtringe, als Mitschlepper in der Durchgangsöffnung 34 vorgesehen. Auch die O-Ringe oder ähnlich geformte elastische Mitschlepper sind bevorzugt in an ihre Form angepasste Nuten eingeformt und/oder darin zumindest reibschlüssig angeordnet. Bei mehreren Ringen sind vorzugsweise die einzelnen Nuten im Durchmesser derart verringert, dass die einzelnen Ringe in ihrer Aufeinanderfolge in der Funktion einer Innenhülse mit mehreren Dichtkanten und einem leichten Einführkonus in Montagerichtung wirken.

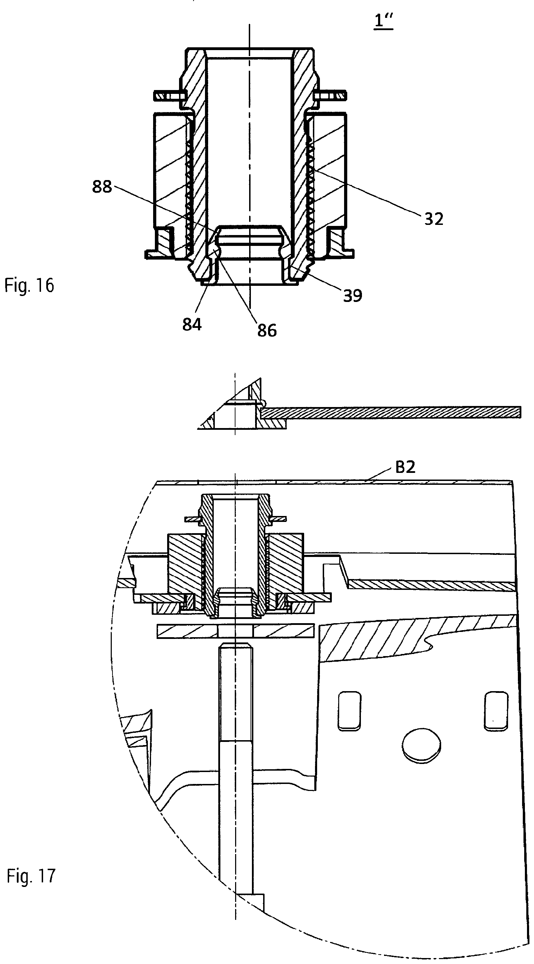

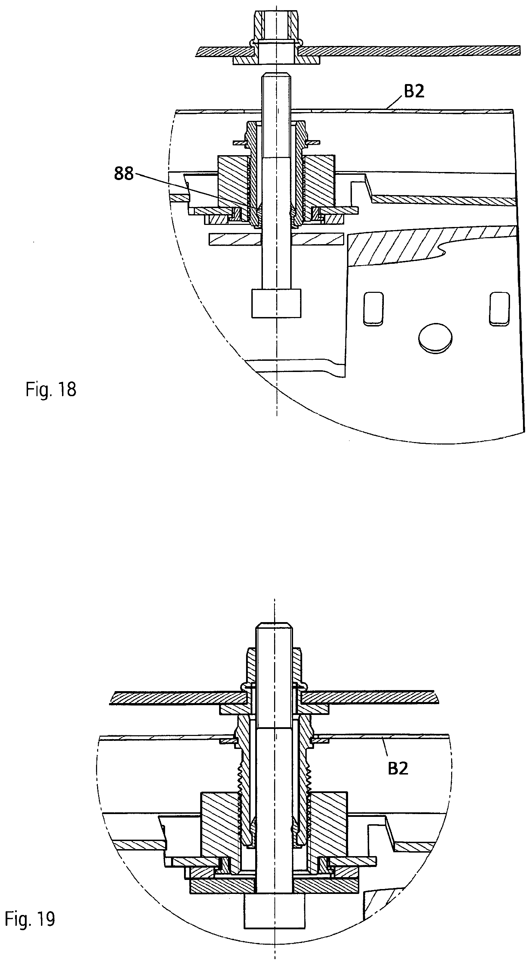

Zudem wird die radiale Vertiefung 82 in axialer Richtung einwärts in das Innere der Innenhülse 80 durch eine Radialwulst 86 begrenzt. Diese Radialwulst 86 zeichnet sich durch radiale Wölbungen zur Innenwand der Innenhülse 30" und in die Durchgangsöffnung 34 der Innenhülse 30" aus. Dadurch realisiert die Radialwulst 86 zwei Funktionen. Zunächst unterstützt sie den Halt des Reibelements 80 am Radialsteg 39, indem die Radialwulst 86 und der Radialkragen 84 entgegengesetzt axial wirkende Hinterschnitte bilden. Des Weiteren ragt die Radialwulst 86 derart weit in das Innere oder die Durchgangsöffnung 34 der Innenhülse 30" hinein, dass der Innendurchmesser der Durchgangsöffnung 34 im Bereich der Radialwulst 86 geringer ist als ein Außendurchmesser einer in der Durchgangsöffnung 34 aufzunehmenden Befestigungsschraube 92. Somit erzeugt die Radialwulst 86 des Reibelements 80 eine reibschlüssige Verbindung mit der Befestigungsschraube 92 beim Eindrehen der Befestigungsschraube 92 in die Distanzhülse 1''', wodurch das Reibelement 80 als Mittschlepper für die Innenhülse 30" wirkt. Wird die Befestigungsschraube 92 während der Installation der Distanzhülse 1" zwischen den beiden Bauteilen B1, B2 in die Innenhülse 30" eingedreht, dreht die Befestigungsschraube 92 die Innenhülse 30" über das Reibelement 80 mit und versetzt es in Richtung des zweiten Bauteils B2 (siehe Fig. 17 - 19). Dieses Versetzen wird aufgrund des gegenläufigen Außengewindes 32 der Innenhülse 30" im Vergleich zum Gewinde der Befestigungsschraube 92 erzielt. Sobald die Innenhülse 30", vorzugsweise deren Anschlagscheibe 40, am zweiten Bauteil B2 anliegt, überwindet die Befestigungsschraube 92 das reibschlüssige Haltemoment des Reibelements 80 und wird weiter eingeschraubt, ohne die Innenhülse 30" weiter mitzudrehen.

Gemäß einer weiteren bevorzugten Ausführungsform vorliegender Erfindung umfasst das elastische Reibelement 80 eine radial einwärts ragende Dichtlippe 88, die sich vorzugsweise vom axial innerhalb der Innenhülse 30" angeordneten Ende des Reibelements 80, insbesondere von der Radialwulst 86, erstreckt. Die Dichtlippe 88 ist kontinuierlich umlaufend am Reibelement 80 vorgesehen. Aufgrund des elastischen Materials des Reibelements 80 und somit der Dichtlippe 88 legt sich diese an die Befestigungsschraube 92 dichtend an. Auf diese Weise wird ein Eindringen von Staub, Flüssigkeit und anderer Verschmutzung durch die Durchgangsöffnung 34 zur Befestigung der Befestigungsschraube 92 und in ein verbundenes Inneres eines Bauteilverbunds vermieden oder zumindest reduziert. In diesem Zusammenhang ist es ebenfalls bevorzugt, anstelle der Dichtlippe 88 die Radialwulst 86 in ihren radialen Dimensionen ausreichend zu gestalten, so dass neben dem Reibschluss zur Befestigungsschraube 92 auch die Dichtfunktion über die Radialwulst 86 gewährleistet ist.

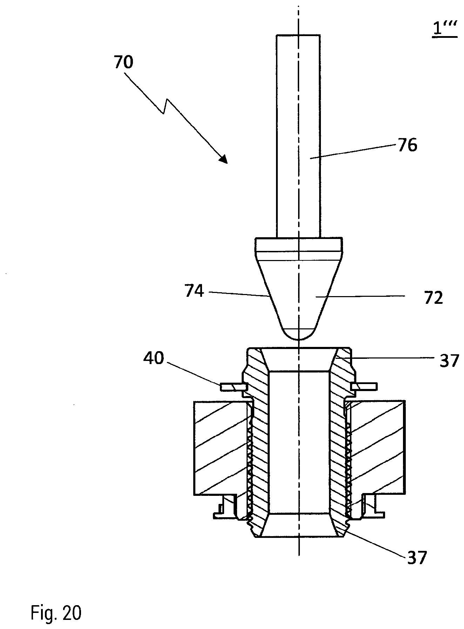

Eine weitere bevorzugte Ausgestaltung der Innenhülse 30''' der Distanzhülse 1''' ist in Fig. 20 in einer seitlichen Schnittdarstellung zu erkennen. Während die Innenhülse 30''' in ihrer konstruktiven Gestaltung eine beliebige Auswahl der Merkmale der oben beschriebenen Ausführungsfonnen der Innenhülse 30; 30'; 30" ohne Reibelement 80 aufweist, umfasst sie zumindest angrenzend an eine ihrer axialen Stirnseiten einen Einführkonus 37. Der Einführkonus 37 stellt eine in die Durchgangsöffnung 34 geneigt verlaufende Kontaktfläche für ein Drehwerkzeug 70 bereit. Das bevorzugte Drehwerkzeug 70 hat zumindest einen drehbaren Kegel 72 mit einer radial äußeren Reibfläche 74. Die Reibfläche 74 bildet mit dem Einführkonus 37 eine reibschlüssige Verbindung, so dass eine Drehung des Drehwerkzeugs 70 auf die Innenhülse 30"' übertragbar ist. Vorzugsweise sind ein Neigungswinkel des Einführkonus 37 und des Kegels 72 ähnlich groß, um eine möglichst große Anlagefläche und vorzugsweise Reibfläche zwischen dem Einführkonus 37 und dem Kegel 72 bereitstellen zu können. Erfindungsgemäß bevorzugt ist der Kegel 72 auf einer Achse 76 angeordnet, um das Eindrehwerkzeug 70 manuell oder automatisch drehen zu können. Es ist ebenfalls bevorzugt, dass der Kegel 72 eine integral ausgebildete Achse 76 aufweist.

Erfindungsgemäß bevorzugt besteht der Kegel 72 aus einem elastischen Material, wie bspw. einem Elastomer, Gummi, Moosgummi oder dgl. Es ist ebenfalls bevorzugt, den Kegel 72 aus beliebigen Material herzustellen, solange seine Außenfläche oder Kegelfläche 74 eine zum Mitdrehen der Innenhülse 30"' ausreichende Rauigkeit oder einen ausreichend hohen Reibungskoeffizienten bereitstellt.

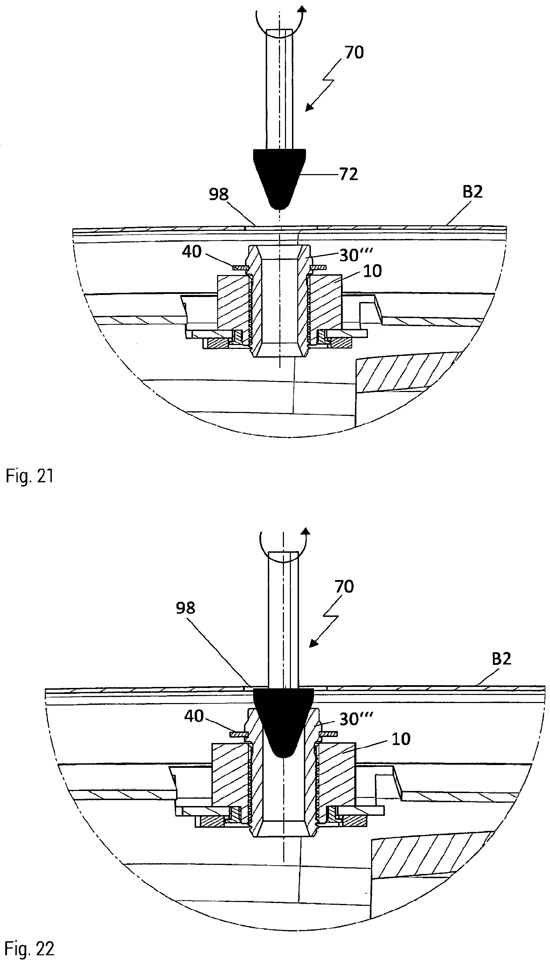

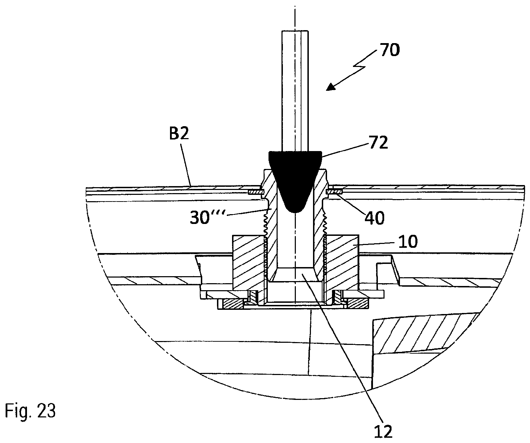

Wie man anhand von Fig. 20 erkennen kann, ist es bevorzugt, den Einführkonus 37 nur an einer der beiden Stirnseiten der Innenhülse 30"' oder an beiden vorzusehen. Diese Konstruktion der Innenhülse 30"' eröffnet die Flexibilität, die axiale Position der Innenhülse 30"' mit Hilfe des Drehwerkzeugs 70 von der Seite des zweiten Bauteils B2 oder von der Seite des ersten Bauteils B1 aus einstellen zu können. Stellt man die Position der Innenhülse 30"' ausgehend von der Seite des zweiten Bauteils B2 ein (siehe Fig. 21 bis 23), greift der Kegel 72 des Drehwerkzeugs 70 durch die Bauteilöffnung 98 in den Einführkonus 37 der Innenhülse 30"' ein. Im Speziellen greift der Kegel 72 an der Seite der Innenhülse 30"' an, die der Anlagescheibe 40 zugewandt ist. Durch Drehen des Drehwerkzeugs 70 wird die Innenhülse 30"' axial versetzt und in Anlage am Bauteil B2 gebracht (siehe Fig. 23).

In gleicher Weise ist es bevorzugt, dass das Drehwerkzeug 70 aus Richtung des ersten Bauteils B1 an der Innenhülse 30"' angreift. Im Speziellen greift der Kegel 72 des Drehwerkzeugs 70 an der Seite der Innenhülse 30"' an, die der Anlagescheibe 40 abgewandt ist (nicht gezeigt). Während des Einstellens der axialen Position der Innenhülse 30''' innerhalb der Außenhülse 10 ragt somit das Drehwerkzeug 70 in die Gewindeöffnung 12 der Außenhülse 10 hinein.

Sobald in beiden alternativen Einstellmöglichkeiten die gewünschte axiale Position der Innenhülse 30''' und somit die abstützende Länge der Distanzhülse 1''' eingestellt ist, wird das Drehwerkzeug 70 entfernt. Dadurch wird die Durchgangsöffnung 34 der Innenhülse 30''' frei, um die Befestigungsschraube 92 einschrauben und die mindestens zwei Bauteile B1, B2 aneinander befestigen zu können.

### Bezugszeichenliste

- 1; 1'; 1"; 1''': Distanzhülse
- 10: Außenhülse
- 12: Gewindeöffnung
- 14: Gewinde
- 16: Stirnseite
- 18: Axialkragen
- 20: Anschlagscheibe
- 22: Drehverriegelungssteg
- 24: Befestigungsfläche
- 25: Befestigungsring
- 26: Befestigungsrand
- 30; 30'; 30"; 30''': Innenhülse
- 32: Außengewinde
- 34: Durchgangsöffnung
- 36; 36': Antriebsmittel
- 37: Einführkonus
- 38: Antriebsmittel
- 39: Radialsteg
- 40: Anlagescheibe
- 70: Drehwerkzeug
- 72: Kegel
- 74: Kegelfläche
- 76: Achse
- 80: Reibelement
- 82: Vertiefung
- 84: Radialkragen
- 86: Radialwulst
- 88: Dichtlippe
- 90, 98: Bauteilöffnung
- B1, B2: Bauteile
- 92: Befestigungsschraube
- 94: Zwischenscheibe
- 96: Mutter
- D: Dachleiste

## Patentansprüche

1. Eine verstellbare Distanzhülse (1; 1'; 1"; 1'''), mit der ein Abstand zwischen einem ersten (B1) und einem zweiten Bauteil (B2) durch Verstellen einer Länge der Distanzhülse (1; 1'; 1"; 1''') überbrückbar ist, wobei die Distanzhülse (1; 1'; 1"; 1''') die folgenden Merkmale aufweist:
a. eine Außenhülse (10) mit einer zentralen Gewindeöffnung (12),
b. eine in der zentralen Gewindeöffnung (12) verstellbar angeordnete hohlzylindrische Innenhülse (30; 30'; 30"; 30'''), die an einer radialen Außenseite ein Außengewinde (32) passend zu einem Innengewinde (14) der Gewindeöffnung (12) aufweist, und die Distanzhülse (1; 1'; 1"; 1''') ist **gekennzeichnet durch**
c. einen sich axial von einer Stirnseite (16) der Außenhülse (10) erstreckenden Axialkragen (18), an dem drehfest eine sich radial erstreckende Anschlagscheibe (20) angeordnet ist, wobei
d. die Anschlagscheibe (20) zumindest ein sich in Richtung Außenhülse (10) in einen Bereich zwischen Anschlagscheibe (20) und Außenhülse (10) erstreckendes Befestigungsmerkmal umfasst, mit dem in einer Öffnung (90) des ersten Bauteils (B1) eine formschlüssige Drehverriegelung und/oder eine kraftschlüssige Drehverriegelung herstellbar ist, wobei
e. die Außenhülse (10) und die Anschlagscheibe (20) jeweils eine Außenkontur aufweisen, die sich radial über den Axialkragen (18) hinaus erstreckt, um einen Befestigungsspaltbereich zu bilden.

2. Die verstellbare Distanzhülse (1; 1'; 1"; 1''') gemäß Anspruch 1, deren Anschlagscheibe (20) in axialer Richtung der Distanzhülse (1; 1'; 1"; 1''') federnd ausgebildet ist und die zumindest einen in den Befestigungsspaltbereich ragenden Drehverriegelungssteg (22) aufweist.

3. Die verstellbare Distanzhülse (1; 1'; 1"; 1''') gemäß Anspruch 1, deren Anschlagscheibe (20) in axialer Richtung nicht federnd ausgebildet ist und die zumindest eine in den Befestigungsspaltbereich ragende Auflaufschräge aufweist.

4. Die verstellbare Distanzhülse (1; 1'; 1"; 1''') gemäß einem der vorhergehenden Ansprüche, deren Innenhülse (30; 30'; 30"; 30''') eine gewindelose Durchgangsöffnung (34) und mindestens ein Antriebsmittel (36; 36'; 38) aufweist, mit dem die Innenhülse (30; 30'; 30"; 30''') in der Außenhülse (10) drehbar und die Länge der Distanzhülse (1; 1'; 1"; 1''') verstellbar ist.

5. Die verstellbare Distanzhülse (1; 1'; 1"; 1''') gemäß Anspruch 4, in der das Antriebsmittel innerhalb der Durchgangsöffnung (34) mithilfe einer unrunden inneren Kontur, vorzugsweise einer Mehrkantkontur, angeordnet ist.

6. Die verstellbare Distanzhülse (1; 1'; 1"; 1''') gemäß Anspruch 4, in der das Antriebsmittel (36; 38) an einer axialen Stirnseite der Innenhülse (30; 30'; 30"; 30''') angeordnet ist, das eine formschlüssige Drehverbindung mit einem Werkzeug ermöglicht.

7. Die verstellbare Distanzhülse (1; 1'; 1"; 1''') gemäß Anspruch 4, in der das Antriebsmittel (36') an der radialen Außenseite der Innenhülse (30; 30'; 30"; 30''') angeordnet ist, die eine Mehrkant- oder unrunde Kontur mit einer Mehrzahl radialer Erhebungen aufweist, auf denen das Außengewinde (32) der Innenhülse (30; 30'; 30"; 30''') angeordnet ist, während zwischen benachbarten radialen Erhebungen ein Freiraum als Antriebmittel zum Eingriff und/oder Angriff eines Werkzeugs vorliegt.

8. Die verstellbare Distanzhülse (1; 1'; 1"; 1''') gemäß einem der Ansprüche 1 bis 3, deren Innenhülse (30; 30'; 30"; 30''') eine gewindelose Durchgangsöffnung (34) und kein Antriebsmittel aufweist, wobei die Innenhülse (30; 30'; 30"; 30''') manuell oder über eine Reibschlussverbindung zwischen einem Werkzeug und einer Innenwand der Durchgangsöffnung (34) drehbar ist.

9. Die verstellbare Distanzhülse (1; 1'; 1"; 1''') gemäß Anspruch 8, in deren Innenhülse (30; 30'; 30"; 30''') mindestens ein ringförmiger elastischer Mitschlepper angeordnet ist, der die Durchgangsöffnung (34) der Innenhülse (30; 30'; 30"; 30''') verengt.

10. Die verstellbare Distanzhülse (1; 1'; 1"; 1''') gemäß Anspruch 9, deren Mitschlepper eine radial einwärts ragende Dichtlippe (88) aufweist, die am Mitschlepper umlaufend angeordnet ist sowie abdichtend an einer Befestigungsschraube anlegbar ist.

11. Die verstellbare Distanzhülse (1; 1'; 1"; 1''') gemäß Anspruch 8, deren Innenhülse (30; 30'; 30"; 30''') benachbart zu einer Stirnseite einen Einführkonus (37) in die Durchgangsöffnung (34) der Innenhülse (30; 30'; 30"; 30''') aufweist, über den ein Reibschluss mit einem Drehwerkzeug (70) herstellbar ist.

12. Eine Verbindung zwischen zumindest einem ersten Bauteil und einer verstellbaren Distanzhülse (1; 1'; 1"; 1''') gemäß einem der Ansprüche 1 bis 11, in der das erste Bauteil (B1) eine unrunde Bauteilöffnung (90) aufweist und ein Rand der Bauteilöffnung (90) in einem Befestigungsspalt der Distanzhülse (1; 1'; 1"; 1''') allein über ein axiales Einsetzen und anschließendes Drehen der Distanzhülse (1; 1'; 1"; 1''') in der Bauteilöffnung (90) befestigt ist.

13. Die Verbindung gemäß Anspruch 12, in der eine Außenkontur einer Außenhülse (10) der Distanzhülse (1; 1'; 1"; 1''') an die unrunde Bauteilöffnung (90) derart angepasst ist, dass in einer ersten Drehwinkelorientierung um eine Längsachse der Distanzhülse (1; 1'; 1"; 1''') ein axiales Einsetzen der Distanzhülse (1; 1'; 1"; 1''') in die unrunde Bauteilöffnung (90) gewährleistet ist, während in einer zweiten Drehwinkelorientierung ein axiales Entfernen der Distanzhülse (1; 1'; 1"; 1''') aus der unrunden Bauteilöffnung (90) durch Formschluss verhindert ist.

14. Die Verbindung gemäß Anspruch 12 oder 13, in der sich die Distanzhülse (1; 1'; 1"; 1''') über eine drehend verstellbare Innenhülse (30; 30'; 30"; 30''') an einem zweiten Bauteil (B2) abstützt und das erste (B1) und zweite Bauteil (B2) über eine Befestigungsschraube (92) miteinander verbunden sind, die sich durch die Distanzhülse (1; 1'; 1"; 1''') erstreckt.

15. Eine Verbindung zwischen einem ersten (B1) und einem zweiten Bauteil (B2) über eine verstellbare Distanzhülse (1; 1'; 1"; 1''') gemäß einem der Ansprüche 1 bis 11, durch die sich eine Befestigungsschraube (92) erstreckt.

16. Ein Verfahren zur Installation einer Distanzhülse (1; 1'; 1"; 1''') gemäß einem der Ansprüche 1 bis 11 in einer unrunden Bauteilöffnung (90) eines ersten Bauteils (B1), das die folgenden Schritte aufweist:
a. Einstecken einer Außenhülse (10), vorzugsweise mit einer darin eingeschraubten Innenhülse (30; 30'; 30"; 30'''), der Distanzhülse (1; 1'; 1"; 1''') in die unrunde Bauteilöffnung (90), deren Außenkontur an die unrunde Bauteilöffnung (90) angepasst ist, bis sich ein Rand der unrunden Bauteilöffnung (90) an einer Anschlagscheibe (20) der Distanzhülse (1; 1'; 1"; 1''') abstützt,
b. Drehen der Außenhülse (10) um eine Längsachse, so dass der Rand der unrunden Bauteilöffnung (90) in einem Befestigungsspaltbereich zwischen Anschlagscheibe (20) und Außenhülse (10) aufgenommen wird, und dabei
c1. Einrasten eines in den Befestigungsspaltbereich ragenden Drehverriegelungsstegs (22) in die unrunde Bauteilöffnung (90) oder in eine Verriegelungsöffnung oder -nut am ersten Bauteil (B1) und/oder
c2. Festklemmen einer in den Befestigungsspaltbereich ragenden Auflaufschräge an einer der Auflaufschräge zugewandten Seite des ersten Bauteils (B1).

17. Verfahren gemäß Anspruch 16, in dem das erste Bauteil (B1) ein Träger im Dachbereich einer Fahrzeugkarosserie ist, an dem über eine Innenhülse (30; 30'; 30"; 30''') der Distanzhülse (1; 1'; 1"; 1''') eine Dachkarosserie abgestützt wird, wobei die Distanzhülse (1; 1'; 1"; 1''') von nur einer Seite gegenüber der Dachkarosserie in der Bauteilöffnung (90) installiert wird.

18. Verfahren gemäß Anspruch 16 oder 17, mit dem weiteren Schritt:
Drehen der Innenhülse (30; 30'; 30"; 30''') der Distanzhülse (1; 1'; 1"; 1''') zur Überbrückung eines Abstands zwischen dem ersten Bauteil (B1) und einem zweiten Bauteil (B2) mit
i. einem Werkzeug, das eine Reibschlussverbindung in einer Durchgangsöffnung (34) der Innenhülse (30; 30'; 30"; 30''') ohne Antriebsmittel herstellt, oder
ii. einem Werkzeug, das eine formschlüssige Drehverbindung mit einem Antriebsmittel (36; 38) an einer axialen Stirnseite der Innenhülse (30; 30'; 30"; 30''') herstellt, oder
iii. einem Werkzeug, das eine formschlüssige Drehverbindung mit einem Antriebsmittel (36') an einer radialen Innenseite oder an einer radialen Außenseite der Innenhülse (30; 30'; 30"; 30''') herstellt.

19. Verfahren gemäß einem der vorhergehenden Ansprüche 16 bis 18 mit dem weiteren Schritt:
Erzeugen einer abdichtenden Verbindung zwischen einer Befestigungsschraube (92) und einer um die Befestigungsschraube (92) umlaufenden Dichtlippe (88) in der Durchgangsöffnung (34) der Innenhülse (30; 30'; 30"; 30''').

## Claims

1. An adjustable distance sleeve (1; 1'; 1"; 1''') by means of which a distance between a first (B1) and a second component (B2) is bridgeable by adjusting a length of the distance sleeve (1; 1'; 1"; 1'''), wherein the distance sleeve (1; 1'; 1"; 1''') comprises the following features:
a. an outer sleeve (10) having a central thread opening (12),
b. a hollow cylindrical inner sleeve (30; 30'; 30"; 30''') arranged adjustably in the central thread opening (12), the inner sleeve (30; 30'; 30"; 30''') having an outer thread (32) at a radial outer side which corresponds to an inner thread (14) of the thread opening (12), and the distance sleeve (1; 1'; 1"; 1''') is **characterized by**
c. an axial collar (18) extending axially from a face side (16) of the outer sleeve (10) at which a radially extending abutment disc (20) is arranged in a rotation-proof manner, wherein
d. the abutment disc (20) comprises at least one fastening feature extending in the direction of the outer sleeve (10) into a portion between abutment disc (20) and outer sleeve (10) by means of which a form-fit rotation lock and/or a force-fit rotation lock is establishable in an opening (90) of the first component (B1), wherein
e. the outer sleeve (10) and the abutment disc (20) comprise each an outer contour extending radially beyond the axial collar (18) for forming a fastening gap portion.

2. The adjustable distance sleeve (1; 1'; 1"; 1''') according to claim 1, the abutment disc (20) of which is formed resiliently in axial direction of the distance sleeve (1; 1'; 1"; 1''') and which comprises at least one rotation-lock web (22) projecting into the fastening gap portion.

3. The adjustable distance sleeve (1; 1'; 1"; 1''') according to claim 1, the abutment disc (20) of which is formed non-resiliently in axial direction and which comprises at least one ramp surface projecting into the fastening gap portion.

4. The adjustable distance sleeve (1; 1'; 1"; 1''') according to one of the preceding claims, the inner sleeve (30; 30'; 30"; 30''') of which comprises a threadless through-opening (34) and at least one drive means (36; 36'; 38) by means of which the inner sleeve (30; 30'; 30"; 30''') is rotatable in the outer sleeve (10) and the length of the distance sleeve (1; 1'; 1"; 1''') is adjustable.

5. The adjustable distance sleeve (1; 1'; 1"; 1''') according to claim 4, in which the drive means is arranged within the through-opening (34) by means of a not round inner contour, preferably a polygonal contour.

6. The adjustable distance sleeve (1; 1'; 1"; 1''') according to claim 4, in which the drive means (36; 38) is arranged at an axial face side of the inner sleeve (30; 30'; 30"; 30'''), which enables a form-fit rotation connection with a tool.

7. The adjustable distance sleeve (1; 1'; 1"; 1''') according to claim 4, in which the drive means (36') is arranged at the radial outer side of the inner sleeve (30; 30'; 30"; 30'''), which comprises a polygonal or a not round contour having a plurality of radial elevations on which the outer thread (32) of the inner sleeve (30; 30'; 30"; 30''') is arranged while a free space as drive means for the engagement and/or abutment of a tool is present between adjacent radial elevations.

8. The adjustable distance sleeve (1; 1'; 1"; 1''') according to one of the claims 1 to 3, the inner sleeve (30; 30'; 30"; 30''') of which comprises a threadless through-opening (34) and no drive means, wherein the inner sleeve (30; 30'; 30"; 30''') is rotatable manually or by means of a frictional connection between a tool and an inner wall of the through-opening (34).

9. The adjustable distance sleeve (1; 1'; 1"; 1''') according to claim 8, in the inner sleeve (30; 30'; 30"; 30''') of which at least one annular elastic dragging member is arranged, which narrows the through-opening (34) of the inner sleeve (30; 30'; 30"; 30''').

10. The adjustable distance sleeve (1; 1'; 1"; 1''') according to claim 9, the dragging member of which has a radially inwardly protruding sealing lip (88), which is arranged circumferentially at the dragging member and can sealingly abut a fastening screw.

11. The adjustable distance sleeve (1; 1'; 1"; 1''') according to claim 8, the inner sleeve (30; 30'; 30"; 30''') of which comprises adjacent to a face side an insertion cone (37) into the through-opening (34) of the inner sleeve (30; 30'; 30"; 30'''), by means of which a frictional engagement with a turning tool (70) is establishable.

12. A connection between at least a first component and an adjustable distance sleeve (1; 1'; 1"; 1''') according to one of the claims 1 to 11, in which the first component (B1) comprises a not round component opening (90) and an edge of the component opening (90) is fastened in a fastening gap of the distance sleeve (1; 1'; 1"; 1''') solely by axially inserting and subsequently rotating the distance sleeve (1; 1'; 1"; 1''') in the component opening (90).

13. The connection according to claim 12, in which an outer contour of an outer sleeve (10) of the distance sleeve (1; 1'; 1"; 1''') is adapted to the not round component opening (90) such that in a first rotation angle orientation around a longitudinal axis of the distance sleeve (1; 1'; 1"; 1'''), an axial inserting of the distance sleeve (1; 1'; 1"; 1''') into the not round component opening (90) is ensured, while in a second rotation angle orientation, an axial removing of the distance sleeve (1; 1'; 1"; 1''') from the not round component opening (90) is prevented by form-fit.

14. The connection according to claim 12 or 13, in which the distance sleeve (1; 1'; 1"; 1''') is supported at a second component (B2) by means of a rotatingly adjustable inner sleeve (30; 30'; 30"; 30''') and the first (B1) and the second component (B2) are connected with each other by means of a fastening screw (92) extending through the distance sleeve (1; 1'; 1"; 1''').

15. A connection between a first (B1) and a second component (B2) by means of an adjustable distance sleeve (1; 1'; 1"; 1''') according to one of the claims 1 to 11, through which a fastening screw (92) extends.

16. A method for installing a distance sleeve (1; 1'; 1"; 1''') according to one of the claims 1 to 11 into a not round component opening (90) of a first component (B1), the method comprising the following steps:
a. inserting an outer sleeve (10) of the distance sleeve (1; 1'; 1"; 1'''), preferably with an inner sleeve (30; 30'; 30"; 30''') screwed into the outer sleeve (10), into the not round component opening (90), the outer contour of which is adapted to the not round component opening (90), until an edge of the not round component opening (90) is supported on an abutment disc (20) of the distance sleeve (1; 1'; 1"; 1'''),
b. rotating the outer sleeve (10) around a longitudinal axis so that the edge of the not round component opening (90) is received in a fastening gap portion between abutment disc (20) and outer sleeve (10) and thereby
c1. snapping-in of a rotation-lock web (22) projecting into the fastening gap portion into the not round component opening (90) or into a lock opening or into a lock groove at the first component (B1) and/or
c2. clamping a ramp surface projecting into the fastening gap portion at a side of the first component (B1) facing the ramp surface.

17. Method according to claim 16, in which the first component (B1) is a support in the roof portion of a vehicle body at which a roof body is supported by means of an inner sleeve (30; 30'; 30"; 30''') of the distance sleeve (1; 1'; 1"; 1'''), wherein the distance sleeve (1; 1'; 1"; 1''') is installed in the component opening (90) only from one side opposite the roof body.

18. Method according to claim 16 or 17, comprising the further step:
rotating the inner sleeve (30; 30'; 30"; 30''') of the distance sleeve (1; 1'; 1"; 1''') for bridging a distance between the first component (B1) and a second component (B2) with
i. a tool that establishes a frictional connection in a through-opening (34) of the inner sleeve (30; 30'; 30"; 30''') without drive means, or
ii. a tool that establishes a form-fit rotation connection with a drive means (36; 38) at an axial face side of the inner sleeve (30; 30'; 30"; 30'''), or
iii. a tool that establishes a form-fit rotation connection with a drive means (36') at a radial inner side or at a radial outer side of the inner sleeve (30; 30'; 30"; 30''').

19. A method according to one of the preceding claims 16 to 18 comprising the further step:
establishing a sealing connection between a fastening screw (92) and a sealing lip (88) extending circumferentially around the fastening screw (92) in the through-opening (34) of the inner sleeve (30; 30'; 30"; 30''').

## Revendications

1. Une douille d'écartement réglable (1 ; 1' ; 1" ; 1'''), laquelle permet de combler une distance entre un premier (B1) et un second composant (B2) moyennant le réglage d'une longueur de la douille d'écartement (1 ; 1' ; 1" ; 1'''), sachant que la douille d'écartement (1 ; 1' ; 1" ; 1''') présente les caractéristiques suivantes :
a) une douille extérieure (10) avec une ouverture filetée centrale (12),
b) une douille intérieure (30 ; 30' ; 30" ; 30'''), cylindrique et creuse, disposée dans l'ouverture filetée centrale (12) de manière réglable, qui présente un filetage extérieur (32) adaptable à un filetage intérieur (14) de l'ouverture filetée (12) sur une face extérieure radiale, et la douille d'écartement (1 ; 1' ; 1" ; 1''') est **caractérisée par**
c) une collerette axiale (18) s'étendant axialement d'une face frontale (16) de la douille extérieure (10), sur laquelle une rondelle de butée (20) s'étendant radialement est disposée de façon solidaire en rotation, dans laquelle
d) la rondelle de butée (20) comprend au moins un élément de fixation s'étendant en direction de la douille extérieure (10) dans une zone comprise entre la rondelle de butée (20) et la douille extérieure (10), lequel permet d'établir un verrouillage en rotation par complémentarité de forme et / ou un verrouillage en rotation par serrage dans une ouverture (90) du premier composant (B1), dans laquelle
e) la douille extérieure (10) et la rondelle de butée (20) présentent respectivement un contour extérieur, qui s'étend radialement au-delà la collerette axiale (18) pour former une zone interstitielle de fixation.

2. La douille d'écartement réglable (1 ; 1' ; 1" ; 1''') selon la revendication 1, dont la rondelle de butée (20) est conçue de manière élastique dans la direction axiale de la douille d'écartement (1 ; 1' ; 1" ; 1''') et qui présente au moins un bossage de verrouillage en rotation (22) dépassant dans la zone interstitielle de fixation.

3. La douille d'écartement réglable (1 ; 1' ; 1" ; 1''') selon la revendication 1, dont la rondelle de butée (20) n'est pas conçue de manière élastique dans la direction axiale et qui présente au moins un chanfrein de contact dépassant dans la zone interstitielle de fixation.

4. La douille d'écartement réglable (1 ; 1' ; 1" ; 1''') selon l'une des revendications précédentes, dont la douille intérieure (30 ; 30' ; 30" ; 30''') présente une ouverture de passage non filetée (34) et au moins un moyen d'entraînement (36 ; 36' ; 38), lequel permet de faire pivoter la douille intérieure (30 ; 30' ; 30" ; 30''') dans la douille extérieure (10) et de régler la longueur de la douille d'écartement (1 ; 1' ; 1" ; 1''').

5. La douille d'écartement réglable (1 ; 1' ; 1" ; 1''') selon la revendication 4, dans laquelle le moyen d'entraînement est disposé à l'intérieur de l'ouverture de passage (34) à l'aide d'un contour intérieur non circulaire, de préférence d'un contour polygonal.

6. La douille d'écartement réglable (1 ; 1' ; 1" ; 1''') selon la revendication 4, dans laquelle le moyen d'entraînement (36 ; 38) est disposé sur une face frontale axiale de la douille intérieure (30 ; 30' ; 30" ; 30'''), lequel permet un assemblage rotatif par complémentarité de forme avec un outil.

7. La douille d'écartement réglable (1 ; 1' ; 1" ; 1''') selon la revendication 4, dans laquelle le moyen d'entraînement (36') est disposé sur la face extérieure radiale de la douille intérieure (30 ; 30' ; 30" ; 30'''), qui présente un contour polygonal ou non circulaire avec de multiples protubérances radiales, sur lesquelles le filetage extérieur (32) de la douille intérieure (30 ; 30' ; 30" ; 30''') est disposé, tandis qu'il existe comme moyen d'entraînement un espace dégagé entre des protubérances radiales adjacentes pour la mise en prise et / ou la pénétration d'un outil.

8. La douille d'écartement réglable (1 ; 1' ; 1" ; 1''') selon l'une des revendications 1 à 3, dont la douille intérieure (30 ; 30' ; 30" ; 30''') présente une ouverture de passage non filetée (34) et aucun moyen d'entraînement, dans laquelle la douille intérieure (30 ; 30' ; 30" ; 30''') peut pivoter manuellement ou par le biais d'un assemblage par friction entre un outil et une paroi intérieure de l'ouverture de passage (34).

9. La douille d'écartement réglable (1 ; 1' ; 1" ; 1''') selon la revendication 8, dans la douille intérieure (30 ; 30' ; 30" ; 30''') de laquelle au moins un entraîneur élastique annulaire est disposé, qui rétrécit l'ouverture de passage (34) de la douille intérieure (30 ; 30' ; 30" ; 30''').

10. La douille d'écartement réglable (1 ; 1' ; 1" ; 1''') selon la revendication 9, dont l'entraîneur présente une lèvre d'étanchéité (88) dépassant radialement vers l'intérieur, qui est disposée tout autour de l'entraîneur et peut être appliquée sur une vis de fixation de façon étanche.

11. La douille d'écartement réglable (1 ; 1' ; 1" ; 1''') selon la revendication 8, dont la douille intérieure (30 ; 30' ; 30" ; 30''') présente un cône d'insertion (37) dans l'ouverture de passage (34) de la douille intérieure (30 ; 30' ; 30" ; 30''') à proximité d'une face frontale, par le biais duquel une friction peut être établie avec un outil rotatif (70).

12. Un assemblage entre au moins un premier composant et une douille d'écartement réglable (1 ; 1' ; 1" ; 1''') selon l'une des revendications 1 à 11, dans lequel le premier composant (B1) présente une ouverture de composant non circulaire (90) et un bord de l'ouverture de composant (90) est fixé dans un interstice de fixation de la douille d'écartement (1 ; 1' ; 1" ; 1''') uniquement par un enfoncement axial et un pivotement consécutif de la douille d'écartement (1 ; 1' ; 1" ; 1''') dans l'ouverture de composant (90).

13. L'assemblage selon la revendication 12, dans lequel un contour extérieur d'une douille extérieure (10) de la douille d'écartement (1 ; 1' ; 1" ; 1''') est adaptée à l'ouverture de composant non circulaire (90), de telle façon qu'un enfoncement axial de la douille d'écartement (1 ; 1' ; 1" ; 1''') dans l'ouverture de composant non circulaire (90) est garanti dans une première orientation de l'angle de rotation autour d'un axe longitudinal de la douille d'écartement (1 ; 1' ; 1" ; 1'''), tandis qu'une extraction axiale de la douille d'écartement (1 ; 1' ; 1" ; 1''') hors de l'ouverture de composant non circulaire (90) est empêchée par complémentarité de forme dans une seconde orientation de l'angle de rotation.

14. L'assemblage selon la revendication 12 ou 13, dans lequel la douille d'écartement (1 ; 1' ; 1" ; 1''') s'appuie sur un second composant (B2) par le biais d'une douille intérieure (30 ; 30' ; 30" ; 30''') réglable en rotation et le premier composant (B1) est relié au second composant (B2) par une vis de fixation (92), qui passe à travers la douille d'écartement (1 ; 1' ; 1" ; 1''').

15. Un assemblage entre un premier (B1) et un second composant (B2) par le biais d'une douille d'écartement réglable (1 ; 1' ; 1" ; 1''') selon l'une des revendications 1 à 11, à travers laquelle passe une vis de fixation (92).

16. Un procédé d'installation d'une douille d'écartement (1 ; 1' ; 1" ; 1''') selon l'une des revendications 1 à 11 dans une ouverture de composant non circulaire (90) d'un premier composant (B1), qui présente les étapes suivantes :
a. l'introduction d'une douille extérieure (10), de préférence avec une douille intérieure (30 ; 30' ; 30" ; 30''') y étant vissée, de la douille d'écartement (1 ; 1' ; 1" ; 1''') dans l'ouverture de composant non circulaire (90), dont le contour extérieur est adapté à l'ouverture de composant non circulaire (90), jusqu'à ce qu'un bord de l'ouverture de composant non circulaire (90) s'appuie sur une rondelle de butée (20) de la douille d'écartement (1 ; 1' ; 1" ; 1'''),
b. la rotation de la douille extérieure (10) autour d'un axe longitudinal, de sorte que le bord de l'ouverture de composant non circulaire (90) se loge dans une zone interstitielle de fixation entre la rondelle de butée (20) et la douille extérieure (10), et en l'occurrence
c1. l'enclenchement d'un bossage de verrouillage en rotation (22) dépassant de la zone interstitielle de fixation dans l'ouverture de composant non circulaire (90) ou dans une ouverture ou bien une rainure de verrouillage sur le premier composant (B1) et / ou
c2. l'immobilisation d'un chanfrein de contact dépassant de la zone interstitielle de fixation sur une face du premier composant (B1) tournée vers le chanfrein de contact.

17. Procédé selon la revendication 16, dans lequel le premier composant (B1) est un support au niveau du toit d'une carrosserie de véhicule, sur lequel s'appuie une carrosserie de toit par le biais d'une douille intérieure (30 ; 30' ; 30" ; 30''') de la douille d'écartement (1 ; 1' ; 1" ; 1'''), dans lequel la douille d'écartement (1 ; 1' ; 1" ; 1''') est installée dans l'ouverture de composant (90) par un seul côté par rapport à la carrosserie de toit.

18. Procédé selon la revendication 16 ou 17 avec l'autre étape suivante :
la rotation de la douille intérieure (30 ; 30' ; 30" ; 30''') de la douille d'écartement (1 ; 1' ; 1" ; 1''') pour combler une distance entre le premier composant (B1) et un second composant (B2) avec
i. un outil, qui établit un assemblage par friction dans une ouverture de passage (34) de la douille intérieure (30 ; 30' ; 30" ; 30''') sans moyen d'entraînement, ou
ii. un outil, qui établit un assemblage rotatif par complémentarité de forme avec un moyen d'entraînement (36 ; 38) sur une face frontale axiale de la douille intérieure (30 ; 30' ; 30" ; 30'''), ou
iii. un outil, qui établit un assemblage rotatif par complémentarité de forme avec un moyen d'entraînement (36') sur une face intérieure radiale ou sur une face extérieure radiale de la douille intérieure (30 ; 30' ; 30" ; 30''').

19. Procédé selon l'une des revendications précédentes 16 à 18 avec l'autre étape suivante :
la réalisation d'un assemblage étanche entre une vis de fixation (92) et une lèvre d'étanchéité (88) entourant la vis de fixation (92) dans l'ouverture de passage (34) de la douille intérieure (30 ; 30' ; 30" ; 30''').
